# EUROPEAN PATENT APPLICATION

(11) **EP 0 851 613 A2**
(43) Date of publication of application: **01.07.1998**
(21) Application number: 97122906.7
(22) Date of filing: 24.12.1997
(51) Int. Cl.: H04B 10/00

(54) **Optical digital communication method and apparatus**

(30) Priority: 26.12.1996 JP 348861/96; 26.12.1996 JP 348873/96
(71) Applicant: TAIYO YUDEN CO., LTD., Taito-ku Tokyo 110 (JP)
(72) Inventor: Ikeda, Masato, Taito-ku, Tokyo, 110 (JP)
(74) Representative: TER MEER STEINMEISTER & PARTNER GbR

(57) **Abstract**

The object of the present invention lies in providing an optical digital communication method and an optical digital communication apparatus capable of reducing the influence of disturbance light noises and of increasing the communication distance. In a transmission unit 80 of an optical digital communication apparatus, two different light emitting elements 14A and 14B are activated in response to a digital signal DS1 to be transmitted and to a digital signal DS1' obtained by inverting the digital signal DS1. Output lights from the light emitting elements 14A and 14B are converted into two linearly polarized lights having different planes of polarization and then into two circularly polarized lights or elliptically polarized lights for the radiation into the air. In a reception unit 90 of the optical digital communication apparatus, two different linearly polarized lights are regenerated from the two circularly polarized lights or elliptically polarized lights radiated from the transmission unit 80 on another optical digital communication apparatus to communicate therewith. Two different light receiving elements 13A and 13B receive the two different linearly polarized lights to generate two electric signals DS2 and DS2'. A subtracter 91 obtains a difference in level between the two electric signals DS2 and DS2' to generate an electric signal DS3, and a digital signal to be transmitted is acquired from said signal DS3.

## Description

### BACKGROUND OF THE INVENTION

### 1. Field of the Invention

The present invention relates generally to an optical digital communication method and apparatus using light for the transmission/ reception of digital data.

### 2. Description of the Related Art

The existing optical digital communication apparatus using light for the communication of digital data comprises a transmission unit and a reception unit. The transmission unit includes infrared LEDs or laser diodes which are activated by digital electric signals corresponding to digital data to be transmitted and which send out infrared signals in response to the digital data into the external space.

The reception unit on the optical digital communication apparatus includes infrared rays receiving elements such as photodiodes for receiving the infrared signals sent out from the transmission unit on another optical digital communication apparatus to communicate therewith, to convert them into analog electric signals. In the reception unit, the thus obtained analog electric signals are amplified and then converted by, e.g., comparators into digital signals to regenerate the digital data.

The optical digital communication apparatus for digital data communication using infrared rays typically performs module-to-module communication, each module incorporating both the transmission unit and the reception unit. However, communication may possibly be performed between a module including only the transmission unit and another module including only the reception unit.

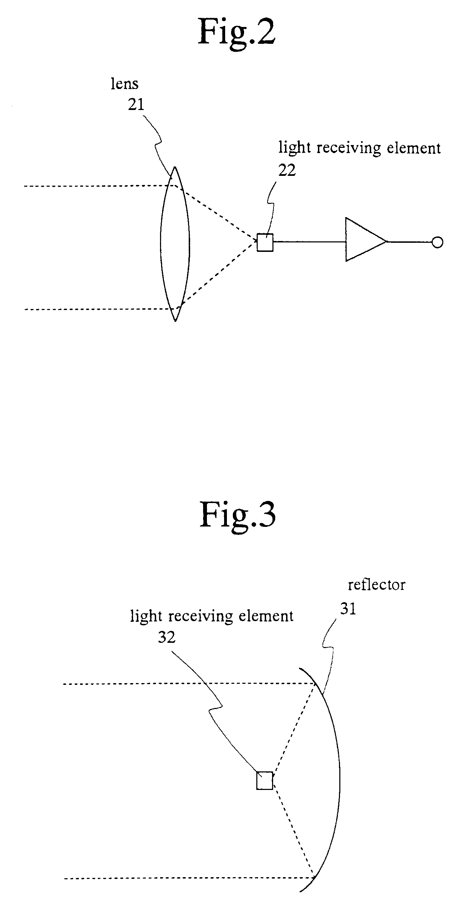

In the case where the signals are transmitted through the space using light such as infrared rays, typical measures for increasing the transmission distance is to increase the intensity of the signal light by condensing the light onto a light receiving face of a light receiving element 22 by a lens 21 as shown in Fig. 2.

Another example may include use of a reflector 31 having a parabolic face as shown in Fig. 3, through which an incident light is condensed onto the light receiving face of a light receiving element 32 to thereby add to the intensity of the signal light.

However, one of the restrictive factors in the communication distance is a disturbance light noise. For instance, the disturbance light noise associated with the infrared digital data communication includes sunlight, radiation from an incandescent light or radiation from a fluorescent light.

In order to reduce the influence of such a disturbance light noise, the reception unit of the optical digital communication apparatus takes various measures. Principal measures taken in the reception unit includes optically provision of an optical filter and positional adjustment of the light receiving element, and includes electrically use of a filter.

However, these measures merely prevent any disturbance light noise from being taken in by shielding or filtering or otherwise intend to remove the once taken-in disturbance noise by an electric filter, so that they have never succeeded in completely eliminating the disturbance light noise. For this reason, up until now the disturbance light noise is still a major restrictive factor in the communication distance.

The above condensing method using a lens or a reflector has entailed the following deficiencies.

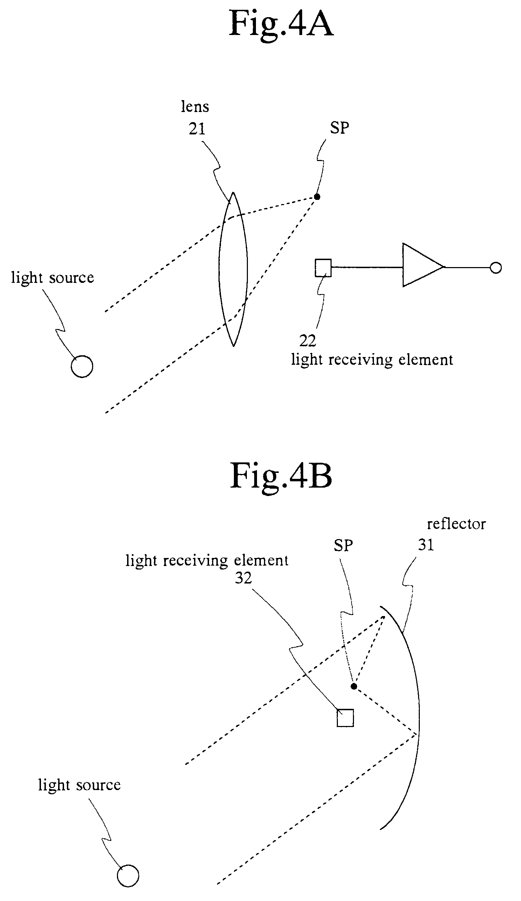

For instance, as shown in Figs. 4A and 4B, when a light source on the transmission side moves from its normal position to another position, a condensed spot SP on the light receiving elements 22 and 32 on the reception side is also displaced in accordance with the condensing power. Therefore, when the distance of movement of the light source is long, the condensed spot may not fall on the light receiving face of the light receiving elements 22 and 32, making it impossible to enhance the condensing ratio.

### SUMMARY OF THE INVENTION

It is therefore an object of the present invention to provide an optical digital communication method and an optical digital communication apparatus capable of accomplishing a reduction in the influence of disturbance light noises and an increase in the communication distance.

In order to achieve the above object, a first aspect of the present invention provides an optical digital communication method comprising the step of, on a transmission side, activating a light emitting element by a digital electric signal to be transmitted, and converting an output light from the light emitting element into a linearly polarized light having a predetermined plane of polarization for the radiation into the air; and on a reception side, receiving the linearly polarized light radiated from the transmission side and another linearly polarized light having a plane of polarization normal to that of the first polarized light with two different light receiving elements correspondingly provided, and obtaining a difference in level between two different electric signals derived from the two different light receiving elements to acquire the digital electric signal to be transmitted.

On the transmission side, according to the above optical digital communication method, a light emitting element is activated by a digital signal to be transmitted, and an output light from the light emitting element is radiated into the air in the form of a linearly polarized light having a predetermined plane of polarization. On the reception side, the linearly polarized light radiated from the transmission side and another linearly polarized light having a plane of polarization normal to that of the first polarized light are exclusively received by two different light receiving elements which is correspondingly provided, and a difference in level is found between two electric signals derived from the two light receiving elements to acquire the digital signal to be transmitted. This ensures an acquisition of the digital signal to be transmitted free from the disturbance light noises input in common to the two light receiving elements.

Another optical digital communication method includes, on the transmission side of the optical digital communication apparatus, activating two different light emitting elements respectively by a digital signal to be transmitted and by an inverted digital signal obtained as a result of the inversion of the digital signal to be transmitted and converting respective output lights from the two light emitting elements into respective linearly polarized lights for the subsequent radiation into the air, and on the reception side of the optical digital communication apparatus, receiving by the two different light receiving elements only the two linearly polarized lights radiated from the transmission side and finding a difference in level between two electric signals derived from the two receiving elements to acquire the digital signal to be transmitted.

On the transmission side, according to this optical digital communication method, the two different light emitting elements are activated respectively by a digital signal to be transmitted and by an inverted digital signal obtained as a result of inversion of the digital signal to be transmitted, and output signals from the two light emitting elements are respectively converted into two different linearly polarized lights and then radiated into the air.

On the reception side, only the two different linearly polarized lights radiated from the transmission side are received respectively by the two different light receiving elements. A difference in level is then found between the two electric signals derived from the two light receiving elements to acquire the digital signal to be transmitted which has been sent out from the transmission side. This ensures an acquisition of the digital signal to be transmitted free from the disturbance light noises input in common to the two light receiving elements.

Accordingly, the disturbance light noise components input equally to the two light receiving elements are eliminated by obtaining a difference in level between the two output signals derived from the two light receiving elements, so that the obtained digital signal results in an electric signal having a level equal to the sum of the two electric signal levels output from the two light receiving elements. It is thus possible to acquire only the digital signal to be transmitted with the disturbance light noises eliminated, accomplishing a remarkable reduction in the influence of the disturbance light noises and an increase in the transmission distance as compared with the conventional techniques.

A further optical digital communication method includes radiating from the transmission side the linearly polarized light in the form of a circularly polarized light or an elliptically polarized light, and on the reception side, converting the circularly polarized light or the elliptically polarized light into a linearly polarized light for reception.

More specifically, the transmission side activates the light emitting element by a digital signal to be transmitted, converts an output light from the light emitting element into a linearly polarized light having a predetermined plane of polarization and then through the wavelength plate into a circularly polarized light or an elliptically polarized light for the radiation into the air. The reception side converts the circularly polarized light or the elliptically polarized light radiated from the transmission side into a linearly polarized light through the wavelength plate, and allows the linearly polarized light obtained through the wavelength plate and another linearly polarized light having a plane of polarization normal to that of the first linearly polarized light to be received by the two different light emitting elements which is correspondingly provided, and finds a difference in level between the two electric signals derived from the two light receiving elements to acquire the digital signal to be transmitted.

On the transmission side, according to this communication method, one light emitting element for instance is activated by a digital signal to be transmitted and an output light from the light emitting element is converted into a linearly polarized light having a predetermined plane of polarization and then through the wavelength plate such as e.g., a quarter or 1/5 wavelength plate into a circularly polarized light or an elliptically polarized light for the radiation into the air. On the reception side, the circularly polarized light or the elliptically polarized light radiated from the transmission side is converted through the wavelength plate into a linearly polarized light which is received through the linearly polarizer by one of the light receiving element. Simultaneously, another linearly polarized light having a plane of polarization normal to that of the first linearly polarized light is received by the other light receiving element. A difference in level is then found between the two electric signals derived from the two light emitting elements to acquire the digital signal to be transmitted. As a result of this, the signal light propagates through the space in the form of a circularly polarized light or an elliptically polarized light, thus ensuring a prevention of any variation in the receive level due to respective rotation angles of the transmission side and the reception side, as well as ensuring an acquisition of the digital signal to be transmitted free from any disturbance light noises input in common to the two light receiving elements.

On the transmission side, according to a further optical digital communication method, the two different light emitting elements are activated respectively by a digital signal to be transmitted and by an inverted digital signal obtained as a result of inversion of the digital signal to be transmitted. Output lights from the light emitting elements are converted into linearly polarized lights and then through the wavelength plates such as e.g., quarter or 1/5 wavelength plates into circularly polarized lights or elliptically polarized lights having respective different directions of rotation and are radiated into the air.

On the reception side, the circularly polarized lights or the elliptically polarized lights radiated from the transmission side on another optical digital communication apparatus to communicate therewith are converted through the wavelength plates into two linearly polarized lights which are exclusively received by the two different light receiving elements. A difference in level is then found between the two electric signals derived from the two light emitting elements to acquire the digital signal to be transmitted which has been delivered from another optical digital communication apparatus to communicate therewith.

As a result of this, the signal light propagates through the space in the form of a circularly polarized light, thus ensuring a prevention of any variation in the receive level due to respective rotation angles of the transmission side and the reception side, as well as ensuring an acquisition of the digital signal to be transmitted free from any disturbance light noises input in common to the two light receiving elements.

Accordingly, since the signal light propagates through the space in the form of a circularly polarized light or an elliptically polarized light, there can be prevented any variation in receive level due to respective rotation angles of the transmission side and the reception side.

Furthermore, the above optical digital communication method employs infrared rays as the lights for use in the communication.

This reduces the attenuation in the air as compared with the case of using a visible light for the communication, achieving an effective communication free from any malfunction.

In order to implement the above optical digital communication method, a second aspect of the present invention provides an optical digital communication apparatus having a transmission unit for issuing an optical signal corresponding to a digital electric signal to be transmitted and a reception unit for receiving the optical signal for the conversion into a digital electric signal, wherein the transmission unit comprises a light emitting element for emitting a light in response to the digital electric signal; and a first linearly polarizer provided on the light emitting element at its light output side; and wherein the reception unit comprises first and second light receiving elements for receiving lights to convert them into electric signals; a second linearly polarizer provided on the first light receiving element at its light input side, for detecting a light emitted from the first light emitting element; a third linearly polarizer provided on the second light receiving element at its light input side, the third linearly polarizer allowing a passage of a linearly polarized light having a plane of polarization normal to the plane of polarization of a linearly polarizing light passing through the second linearly polarizer; and a subtracter for receiving electric signals derived from the first and second light receiving elements to generate a difference in level between the electric signals.

In the transmission unit, according to this optical digital communication apparatus, the light emitting element receives a digital signal to be transmitted and emits a light in response to the digital signal. The light emitted from the light emitting element is converted through the first linearly polarizer into a linearly polarized light and then is radiated into the air.

In the reception unit on the other hand, the light radiated through the first linearly polarized plate traverses the second linearly polarizer into the first light receiving element. A linearly polarized light having a plane of polarization normal to the plane of polarization of the linearly polarized light passing through the second linearly polarizer, among the disturbance lights scattering in the space, is allowed to traverse the third linearly polarizer into the second light receiving element.

The first and second light receiving elements convert the incident lights into electric signals, which are fed to the subtracter. The subtracter obtains a difference in level between the two input electric signals to generate as its output an electric signal having a level of that value.

This enables the subtracter to eliminate the disturbance light noise components equally input to the first and second light receiving elements. Furthermore, the electric signal derived from the first light receiving element is in phase with the digital signal to be transmitted and the electric signal derived from the second light receiving element contains only the disturbance light components, so that obtaining a difference in level between the two electric signals results in an acquisition of an electric signal in phase with the digital signal to be transmitted and having an electric signal level output from the first light receiving element.

A third aspect of the present invention provides an optical digital communication apparatus having a transmission unit for issuing an optical signal corresponding to a digital electric signal to be transmitted and a reception unit for receiving the optical signal for the conversion into a digital electric signal, wherein the transmission unit comprises a light emitting element for emitting a light in response to the digital electric signal; a first linearly polarizer provided on the light emitting element at its light output side; and a first wavelength plate for receiving a linearly polarized light output from the first linearly polarizer to generate a circularly polarized light or an elliptically polarized light as its outputs; and wherein the reception unit comprises a second wavelength plate for receiving a circularly polarized light or an elliptically polarized light output from the first wavelength plate to generate a linearly polarized light as its output; a second linearly polarizer arranged to allow a passage of only a linearly polarized light output from the second wavelength plate; a third wavelength plate for receiving a circularly polarized light or an elliptically polarized light having a plane of polarization whose direction of rotation differs from that of the plane of polarization of a circularly polarized light or an elliptically polarized light output from the first wavelength plate, to generate a linearly polarized light as its output; a third linearly polarizer arranged to allow a passage of only a linearly polarized light output from the third wavelength plate; a first light receiving element for receiving a linearly polarized light output from the second linearly polarizer to convert it into an electric signal; a second light receiving element for receiving a linearly polarized light output from the third linearly polarizer to convert it into an electric signal; and a subtracter for receiving electric signals derived from the first and second light receiving elements to generate as its output a difference in level between the electric signals.

In the transmission unit, according to this optical digital communication apparatus, the light emitting element receives a digital signal to be transmitted and emits a light in response to the digital signal. The light emitted from the light emitting element is converted through the first linearly polarizer into a linearly polarized light and then through the first wavelength plate such as the quarter or 1/5 wavelength plate into a circularly polarized light or an elliptically polarized light for the radiation into the air.

In the reception unit on the other hand, the circularly polarized light or the elliptically polarized light radiated through the first linearly polarizer and the first wavelength plate is converted through the second wavelength plate into a linearly polarized light, which traverses the second linearly polarizer into the first light receiving element. Furthermore, a circularly polarized light or an elliptically polarized light having a plane of polarization whose direction of rotation is different from that of the plane of polarization of the circularly polarized light or the elliptically polarized light radiated from the first wavelength plate, among the disturbance lights scattering in the space, passes through the third wavelength plate to be converted into a linearly polarized light, which traverses the third linearly polarizer into the second light receiving element.

The first and second light receiving elements convert the incident lights into electric signals, which are fed to the subtracter. The subtracter obtains a value of difference in level between the two input electric signals to generate as its output an electric signal having a level of this value.

This enables the subtracter to eliminate the disturbance light noise components input equally to the first and second light receiving elements. The electric signal derived from the first light receiving element is in phase with the digital signal to be transmitted and the electric signal derived from the second light receiving element contains only the disturbance light components, so that obtaining a difference in level between the two electric signals results in an acquisition of an electric signal in phase with the digital signal to be transmitted and having the electric signal level derived from the first light receiving element. Moreover, since the signal light propagates through the space in the form of a circularly polarized light or an elliptically polarized light, any variation in receive level due to respective rotation angles of the transmission unit and the reception unit can be prevented.

A fourth aspect of the present invention provides an optical digital communication apparatus having a transmission unit for delivering into the space an optical signal corresponding to a digital electric signal to be transmitted and a reception unit for receiving an optical signal from the space to convert it into a digital electric signal, wherein the transmission unit comprises a first light emitting element for emitting a light in response to a digital electric signal to be transmitted; a NOT circuit for inverting the digital electric signal; a second light emitting element for emitting a light in response to a digital electric signal which has been inverted by the NOT circuit; a first linearly polarizer for receiving a light emitted from the first light emitting element to generate a linearly polarized light as its output; and a second linearly polarizer for receiving a light emitted from the second light emitting element to generate as its output a linearly polarized light having a plane of polarization different from the plane of polarization of a linearly polarized light output from the first linearly polarizer; and wherein the reception unit comprises first and second light receiving elements for receiving lights to convert them into electric signals; a third linearly polarizer provided on the first light receiving element at its light input side, the third linearly polarizer allowing a passage therethrough of a linearly polarized light output from the first light emitting element; a fourth linearly polarizer provided on the second light emitting element at its light input side, the fourth linearly polarizer allowing a passage through of a linearly polarized light output from the second light emitting element; and a subtracter for receiving electric signals derived from the first and second light receiving elements to generate as its output a difference in level between the electric signals.

According to this optical digital communication apparatus, the disturbance light noise components input equally to the first and second light receiving elements are eliminated by the subtracter, which generates as its output an electric signal in phase with the digital electric signal to be transmitted and having a level equal to the sum of the electric signal levels derived from the first and second light receiving elements, thus making it possible to acquire only the digital electric signal to be transmitted with the disturbance light noises eliminated and hence to accomplish a remarkable reduction in influence of the disturbance light noises as well as an increase in the communication distance as compared with the conventional apparatuses.

A fifth aspect of the present invention provides an optical digital communication apparatus having a transmission unit for delivering into the space an optical signal corresponding to a digital electric signal to be transmitted and a reception unit for receiving an optical signal from the space to convert it into a digital electric signal, wherein the transmission unit comprises a first light emitting element for emitting a light in response to a digital electric signal to be transmitted; a NOT circuit for inverting the digital electric signal; a second light emitting element for emitting a light in response to a digital electric signal which has been inverted by the NOT circuit; a first linearly polarizer for receiving a light emitted from the first light emitting element to generate a linearly polarized light as its output; a first wavelength plate for receiving a linearly polarized light output from the first linearly polarizer to generate a circularly polarized light or an elliptically polarized light as its output; a second linearly polarizer for receiving a light emitted from the second light emitting element to generate a linearly polarized light as its output; and a second wavelength plate for receiving a linearly polarized light output from the second linearly polarizer to generate as its output a circularly polarized light or an elliptically polarized light having a plane of polarization whose direction of rotation is different from that of the plane of polarization of the circularly polarized light or the elliptically polarized light output from the first wavelength plate; and wherein the reception unit comprises a third wavelength plate for receiving a circularly polarized light or an elliptically polarized light output from the first wavelength plate to generate a linearly polarized light as its output;
a third linearly polarizer arranged so as to allow a passage therethrough of only a linearly polarized light output from the third wavelength plate; a fourth wavelength plate for receiving a circularly polarized light or an elliptically polarized light output from the second wavelength plate to generate a linearly polarized light as its output; a fourth linearly polarizer arranged so as to allow a passage therethrough of only a linearly polarized light output from the fourth wavelength plate; a first light receiving element for receiving a linearly polarized light output from the third linearly polarizer to convert it into an electric signal; a second light receiving element for receiving a linearly polarized light output from the fourth linearly polarizer to convert it into an electric signal; and a subtracter for receiving electric signals derived from the first and second light receiving elements to generate as its output, a difference in level between the electric signals.

According to this optical digital communication apparatus, the optical signal radiated from the transmission unit propagates through the space in the form of a circularly polarized light or an elliptically polarized light, so that there can be prevented any variation in receive level due to respective rotation angles of the transmission unit and the reception unit.

The disturbance light noise components input equally to the first and second light receiving elements are eliminated by the subtracter, which generates as its output an electric signal in phase with the digital electric signal to be transmitted and having a level equal to the sum of the electric signal levels derived from the first and second light receiving elements.

It is thus possible to acquire only the digital electric signal to be transmitted with the disturbance light noises eliminated and hence to accomplish a remarkable reduction in influence of the disturbance light noises as well as an increase in the communication distance as compared with the conventional apparatuses.

Furthermore, use of the infrared rays as the lights for the communication between the transmission unit and the reception unit leads to a reduction in attenuation in the air as compared with the case of using a visible light, and realizes an efficient communication free of any malfunction.

Furthermore, these optical digital communication apparatuses are provided with condensers each having an exit port where the light receiving element is disposed. This allows a significant increase in the condensable angle of incidence on the light receiving element as compared with the prior art, resulting in an enlarged allowable range of movement of the transmission side light source.

This condenser is shaped into a truncated cone or a truncated pyramid having a bottom as the light entrance port and a top as a light exit port which is smaller in area than the entrance port, with at least the inside of the side faces serving as a light reflective face.

By virtue of the condenser having such a truncated conical shape or truncated pyramidal shape, a light falling on the entrance port of the condenser is reflected several times on the inside of the side faces of the condenser and gathered into the light exit port, remarkably adding to the condensable angle of incidence as compared with the conventional apparatuses.

The condenser may be shaped into a truncated quadrangular pyramid having square or rectangular entrance and exit ports so that any turbulence of the linearly polarized light within the condenser can be prevented, thereby ensuring a reduction of loss attributable to a turbulence of the polarized state as well as easy manufacture.

The condenser may be hollow with the entrance port and exit port opened so that a light which has entered the interior of the condenser through the opened entrance port is reflected several times on the inner side faces of the condenser and condensed into the opened exit port.

The entire condenser including its interior may be made of a translucent material having a predetermined refractive index. This type of condenser allows a light from the external space falling on the entrance port of the condenser to be refracted in conformity with the refractive index to enter the interior of the translucent material forming the solid condenser.

Furthermore, since the side faces of the condenser serve as a light reflective face due to a difference in refractive index between the interior of the translucent material and the external space and due to the angle of incident light, the light which has entered the interior of the translucent material reflects several times on the side faces to exit the exit port, resulting in a remarkable increase in the condensable angle of incidence as compared with the prior art.

The light entrance face of the condenser made of the translucent material may be comprised of at least one outwardly protruding face whose profile varies in a predetermined linear or parabolic form. This condenser achieves a larger allowable range of angle of incident light and an increased condensable angle of incidence as compared with the condenser having the planar light entrance face.

### BRIEF DESCRIPTION OF THE DRAWINGS

The above and other objects, aspects, features and advantages of the present invention will become more apparent from the following detailed description in conjunction with the accompanying drawings, in which:
Fig. 1 is a perspective view of an optical digital communication apparatus in accordance with a first embodiment of the present invention;
Fig. 2 illustrates a condenser of a conventional example;
Fig. 3 illustrates another condenser of a conventional example;
Figs. 4A and 4B illustrate problems involved in the conventional examples;
Fig. 5 is a perspective view of a condenser provided in the optical digital communication apparatus in accordance with the first embodiment of the present invention;
Fig. 6 illustrates a principal configuration of an electric and optical system of the optical digital communication apparatus in accordance with the first embodiment of the present invention;
Figs. 7A to 7C illustrate condensing actions of the condenser used in the first embodiment of the present invention;
Fig. 8 illustrates a result of a comparative experiment on the relation between condensing power and the directivity of the condenser used in the first embodiment of the present invention;
Fig. 9 is a diagram for explaining the definition of the directivity of the condenser used in the first embodiment of the present invention;
Fig. 10 illustrates a result of a comparative experiment on the condenser for use in the first embodiment of the present invention;
Fig. 11 illustrates signal waveforms appearing in the first embodiment of the present invention;
Fig. 12 is a circuit diagram of an embodiment of an electric circuit included in the first embodiment of the present invention;
Fig. 13 is a perspective view of an optical digital communication apparatus in accordance with a second embodiment of the present invention;
Fig. 14 illustrates a principal configuration of an electric and optical system of the optical digital communication apparatus in accordance with the second embodiment of the present invention;
Fig. 15 illustrates another arrangement of wavelength plates for use in the second embodiment of the present invention;
Fig. 16 is a perspective view of an optical digital communication apparatus in accordance with a third embodiment of the present invention;
Fig. 17 illustrates a principal configuration of an electric and optical system included in the optical digital communication apparatus in accordance with the third embodiment of the present invention;
Fig. 18 illustrates a relation between linearly polarizers and quarter wavelength plates used in the third embodiment of the present invention;
Fig. 19 illustrates signal waveforms appearing in the third embodiment of the present invention;
Fig. 20 is a circuit diagram of an embodiment of an electric circuit included in the third embodiment of the present invention;
Fig. 21 illustrates a configuration of an optical system included in an optical digital communication apparatus in accordance with a fourth embodiment of the present invention;
Fig. 22 illustrates a configuration of an optical system included in an optical digital communication apparatus in accordance with a fifth embodiment of the present invention;
Fig. 23 is a perspective view of an optical digital communication apparatus in accordance with a sixth embodiment of the present invention;
Fig. 24 illustrates a principal configuration of an electric and optical system of the optical digital communication apparatus in accordance with the sixth embodiment of the present invention;
Fig. 25 is a perspective view of an optical digital communication apparatus in accordance with a seventh embodiment of the present invention;
Fig. 26 illustrates a condensing action occurring in the seventh embodiment of the present invention;
Figs. 27A and 27B are a side elevational view and a perspective view, respectively, of a condenser for use in an optical digital communication apparatus in accordance with an eighth embodiment of the present invention;
Fig. 28 is a perspective view of a condenser for use in an optical digital communication apparatus in accordance with a ninth embodiment of the present invention;
Fig. 29 is a perspective view of an optical digital communication apparatus in accordance with a tenth embodiment of the present invention;
Fig. 30 is a perspective view of a condenser for use in the optical digital communication apparatus in accordance with the tenth embodiment of the present invention;
Fig. 31 illustrates a condensing action occurring in the tenth embodiment of the present invention;
Fig. 32 illustrates another example of arrangement of a linearly polarizer for use in the tenth embodiment of the present invention; and
Figs. 33 and 34 are diagrams for explaining applied examples of the tenth embodiment of the present invention.

### DESCRIPTION OF THE PREFERRED EMBODIMENTS

The present invention is now described with reference to the accompanying drawings which illustrate exemplary embodiments of the invention in a non-limitative manner.

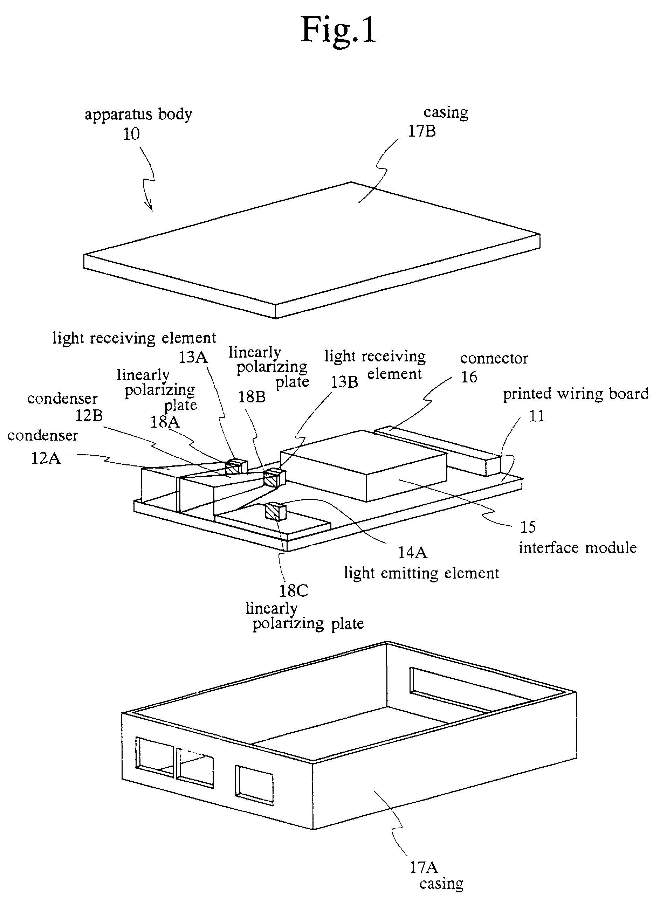

Fig. 1 is a perspective view of an optical digital communication apparatus in accordance with a first embodiment of the present invention. As shown, an optical digital communication apparatus body (hereinafter, referred to as an apparatus body) is generally designated at 10 and comprises a printed wiring board 11 on which are mounted condensers 12A and 12B, light receiving elements 13A and 13B, a light emitting element 14A, an interface module 15, a connector 16, casings 17A and 17b, and linearly polarizers 18A, 18B and 18C.

The casing 17A includes two windows through which external optical signals are received by the light receiving elements 13A and 13B, and another window through which optical signals emitted from the light emitting element 14A are delivered to the exterior. Light receiving faces of the light receiving elements 13A, 13B and a light exit face of the light emitting element 14A are provided with the linearly polarizers 18A, 18B and 18C, respectively, the condensers 12A and 12B being interposed between the light receiving elements 13A, 13B and the two windows associated therewith, respectively.

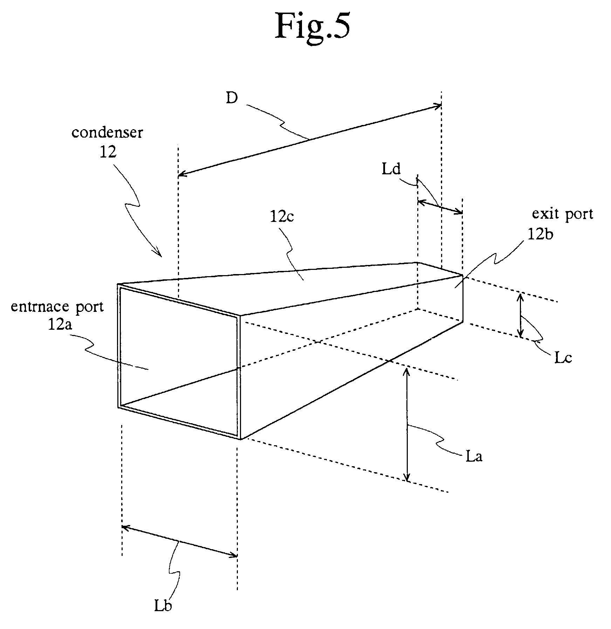

The condensers 12A and 12B as shown in Fig. 5 each include an entrance port 12a and an exit port 12b which are in the shape of squares corresponding respectively to the bottom and top of a truncated quadratic pyramid whose inner side faces 12c are made of a metal serving as light reflecting faces.

The entrance port 12a has a longitudinal length La of 18mm and a transverse length Lb of 18mm, the exit port 12b being 9mm in both longitudinal and transverse lengths Lc and Ld, with a distance D of 30 mm between the entrance port 12a and the exit port 12b.

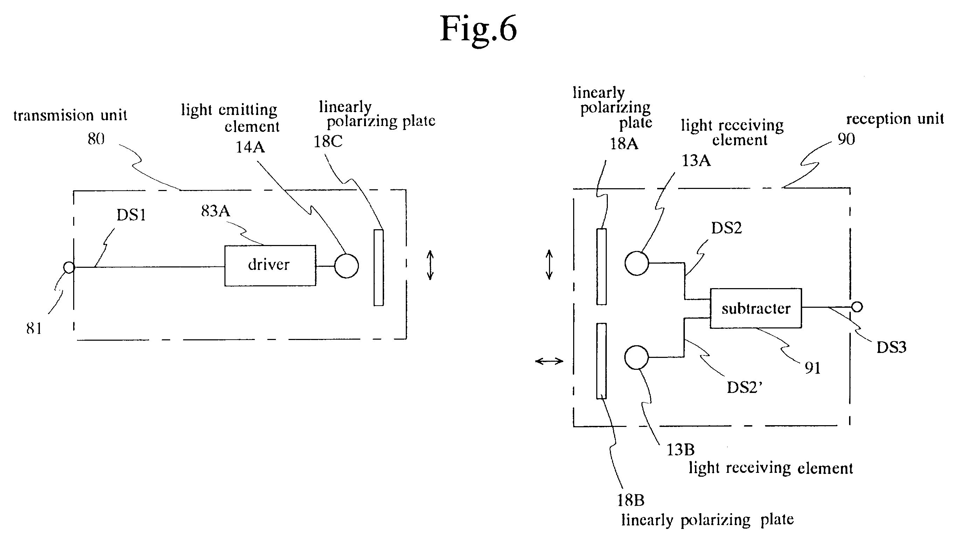

Fig. 6 illustrates a principal configuration of an electric and optical circuit in the optical digital communication apparatus of the first embodiment. As shown, the optical digital communication apparatus body 10 comprises a transmission unit 80 and a reception unit 90, the electric circuits of the transmission unit 80 and the reception unit 90 being incorporated within the interior of the interface module 15.

The transmission unit 80 includes a input terminal 81, a driver 83A, the light emitting element 14A and the linearly polarizer 18C.

After having been input to the input terminal 81, a digital signal DS1 to be transmitted is fed to the driver 83A.

On the basis of the input digital signal, the driver 83A drives the light emitting element 14A connected therewith, so that the light emitting element 14A emits a light.

The light emitting element 14A is provided on its light output side with the linearly polarizer 18C so that a light emitted from the light emitting element 14A passes through the linearly polarizer 18C to be delivered to the exterior in the form of a linearly polarized light.

The reception unit 90 on the other hand comprises the linearly polarizers 18A and 18B, the light receiving elements 13A and 13B and a subtracter 91.

The light receiving elements 13A and 13B input optical signals issued from the transmission unit 80 on another optical digital communication apparatus and convert them to electric signals DS2 and DS2', respectively, for output. The light receiving element 13A is provided on its light input side with the linearly polarizer 18A so that the former can detect a linearly polarized light sent out through the linearly polarizer 18C provided in the transmission unit 80 on the another optical digital communication apparatus. It is to be noted herein that the linearly polarizers 18A and 18B are so arranged that planes of polarization of linearly polarized lights passing through the plates 18A and 18B can be normal to each other, the linearly polarizers 18A and 18B being so set as to allow only mutually quite different linearly polarized lights to pass therethrough.

The output electric signals DS2 and DS2' of the two light receiving elements 13A and 13B are fed to the subtracter 91. The subtracter 91 generates for instance an electric signal DS3 having a voltage level obtained by subtracting from a voltage level of the electric signal DS2 issued from the light receiving element 13A on one hand, a voltage level of the electric signal DS2' issued from the light receiving element 13B on the other hand.

According to the thus configured optical digital communication apparatus, a signal light emitted from the light emitting element 14A passes through the linearly polarizer 18C and is sent out through the window in the casing 17A to the external space outside the casing 17, and finally transmitted to another optical digital communication apparatus desired to communicate therewith. At that time, the condensers 12A and 12B interposed between the light receiving elements 13A and 13B and the associated light receiving windows serve as hoods for the light receiving elements 13A and 13B, thereby preventing signal lights emitted from the light emitting element 14A from being received by the light receiving elements 13A and 13B in the same optical digital communication apparatus, which would otherwise cause any occurrence of malfunction.

On the contrary, a signal light transmitted from another optical digital communication apparatus desired to communicate therewith is input through the light receiving window to the condenser 12A and thereby concentrated for the reception by the light receiving element 13A.

A condensing power (condensing ratio) at that time depends both on the area S1 ( = La x Lb) of the entrance port 12a and on the area S2 ( = Lc x Ld) of the exit port 12b of the condenser 12 (12A, 12B), the condensing power (condensing ratio) being represented as S1/S2, where La and Lb are longitudinal and transverse lengths, respectively, of the entrance port 12a, with Lc and Lb being longitudinal and transverse lengths, respectively, of the exit port 12b.

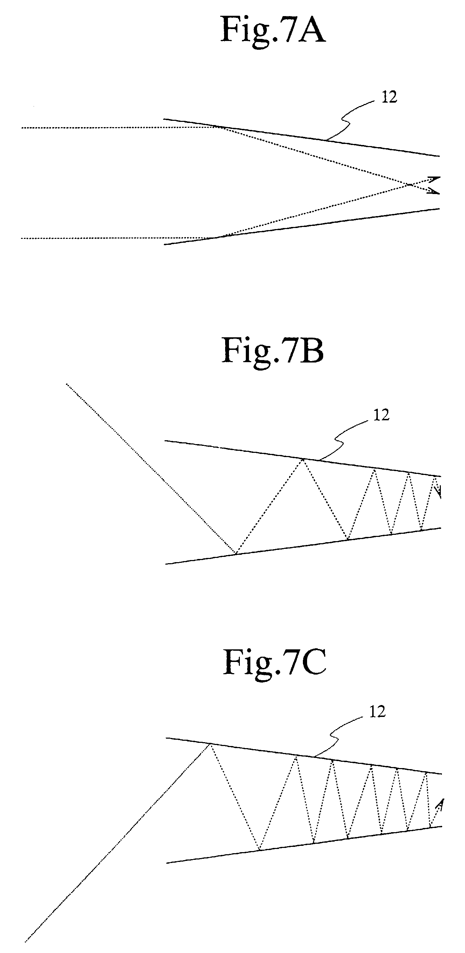

As illustrated in Figs. 7A to 7C, signal lights input to the condenser 12 are reflected several times on the inner light reflecting side faces 12c of the condenser 12 and are gathered onto the light receiving element 13.

Thus, almost all of the signal lights input to the entrance port 12a of the condenser 12 can be gathered onto the light receiving element 13A, with the result that it becomes possible to remarkably improve the condensing power (condensing ratio) as compared with the conventional apparatus and to ensure a secure reception of light even though the transmission side light source has been moved insofar as it lies within a predetermined range, thereby achieving a significantly enlarged light receiving allowable range as compared with the prior art.

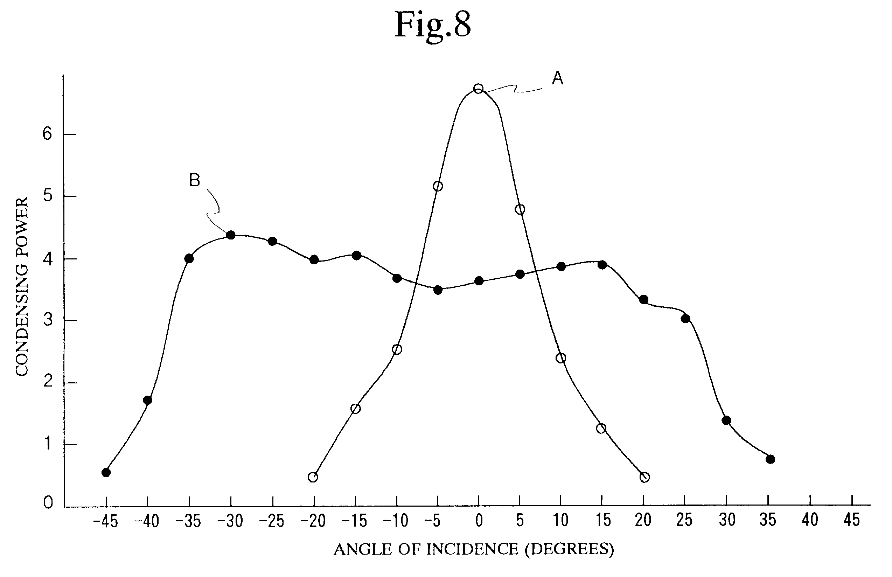

Fig. 8 illustrates a result of a comparative experiment on the relation between the condensing power and the directivity.

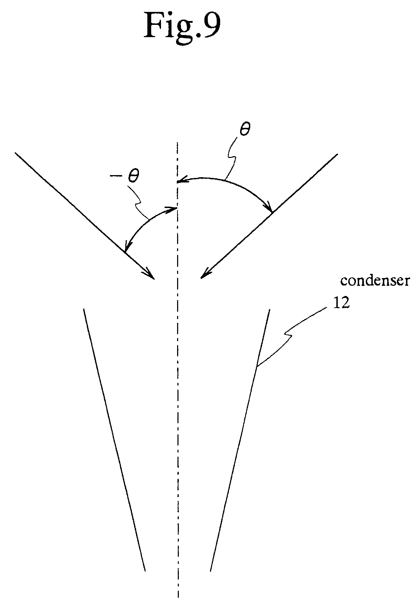

In Fig. 8, vertical and horizontal axes represent the condensing power and the directivity, respectively, with the directivity being given as an angle *θ* of incidence of a signal light relative to the central axis of the condenser 12 as shown in Fig. 9. A in Fig. 8 represents a characteristic of the conventional example shown in Fig. 2 and B represents a characteristic of this embodiment.

As is apparent from Fig. 8, the directivity (allowable angle of incidence) is significantly enlarged in the first embodiment as compared with the conventional example.

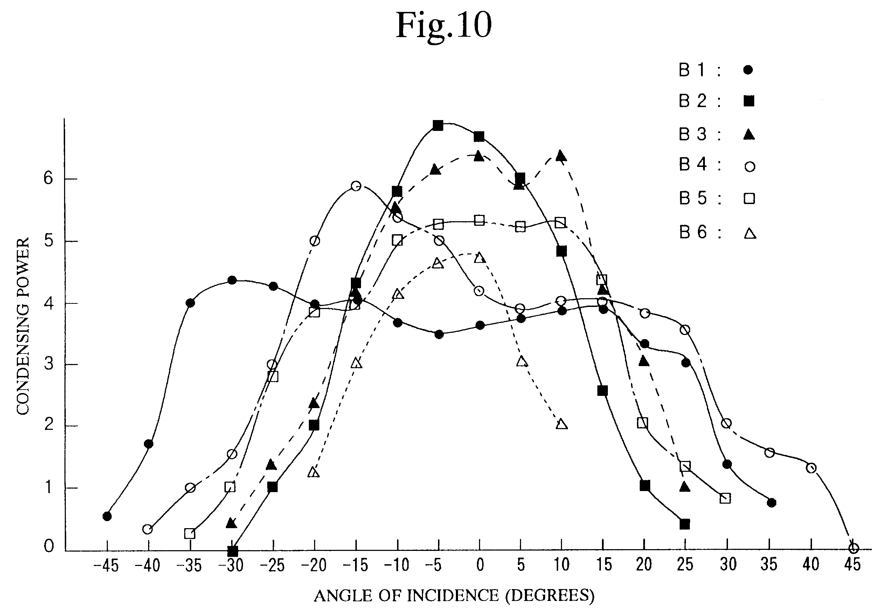

The directivity is variable by changing dimensions of the entrance port 12a and the exit port 12b of the condenser 12 and the distance therebetween. Fig. 10 illustrates characteristics of the directivity obtained when such dimensions have been changed.

B1 to B6 in Fig. 10 represent the directivity obtained when the values have been set as follows.
B1: La = Lb = 18mm, Lc = Ld = 9mm, D = 30mm
B2: La = Lb = 18mm, Lc = Ld = 6mm, D = 30mm
B3: La = Lb = 15mm, Lc = Ld = 6mm, D = 30mm
B4: La = Lb = 18mm, Lc = Ld = 9mm, D = 20mm
B5: La = Lb = 18mm, Lc = Ld = 6mm, D = 20mm
B6: La = Lb = 12mm, Lc = Ld = 4mm, D = 25mm

Naturally, the directivity can be so varied as to be different in the longitudinal the transverse directions by differently setting the longitudinal and transverse lengths of the entrance port 12a and the exit port 12b.

Description is now made of an operation of the electric circuit in the first embodiment.

In the transmission unit 80, the light emitting element 14A receives a digital signal DS1 to be transmitted, on the basis of which the light emitting element 14A emits a light. Then, the light given out from the light emitting element 14A is linearly polarized by the linearly polarizer 18C and thereafter radiated into the air.

In the reception unit 90 on the other hand, a linearly polarized light radiated through the linearly polarizer 18C in the transmission unit 80 of another optical digital communication apparatus passes through the linearly polarizer 18A and is received by the light receiving element 13A.

A predetermined linearly polarized component in the space, that is, a linearly polarized light normal to the linearly polarized light radiated through the linearly polarizer 18C passes through the linearly polarizer 18B for input to the light receiving element 13B.

In the two light receiving elements 13A and 13B, the incident lights are converted into electric signals DS2 and DS2' which are fed to the subtracter 91. In the subtracter 91, a value of difference is obtained between the two input electric signals DS2 and DS2' to issue an electric signal DS3 having a level of that value.

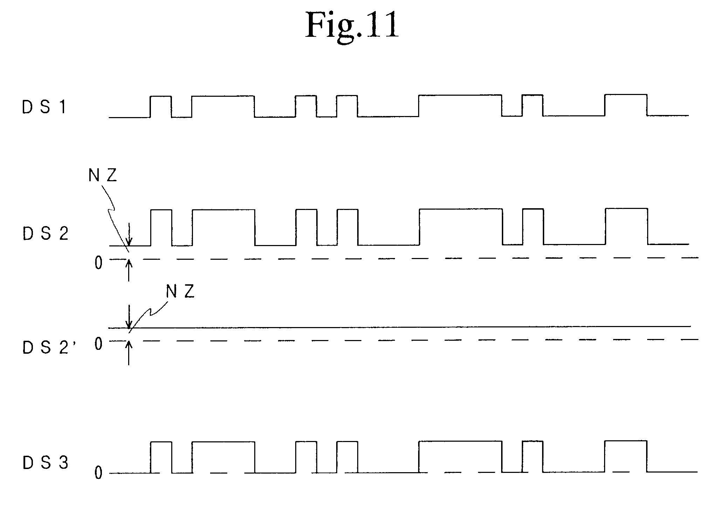

As depicted in waveform diagrams of Fig. 11, this allows the subtracter 91 to eliminate disturbance light noise components NZ equivalently input to the two light receiving elements 13A and 13B.

The electric signal DS2 derived from the light receiving element 13A on one hand is in phase with the digital signal DS1 to be transmitted whereas the electric signal DS2' derived from the light receiving element 13B on the other hand includes only a disturbance light noise component. In consequence, obtaining a difference in voltage level between the two electric signals results in an acquisition of the electric signal DS3 in phase with the digital signal DS1 to be transmitted and having an electric signal level output from the light receiving element 13A.

Thus, there can be exclusively obtained a digital signal to be transmitted with the disturbance light noise eliminated, thereby making it possible to extremely reduce the influence of the disturbance light noise as compared with the prior art and to accomplish an increase of the communication distance.

Description will then be made of an embodiment of an electric circuit for use in the first embodiment.

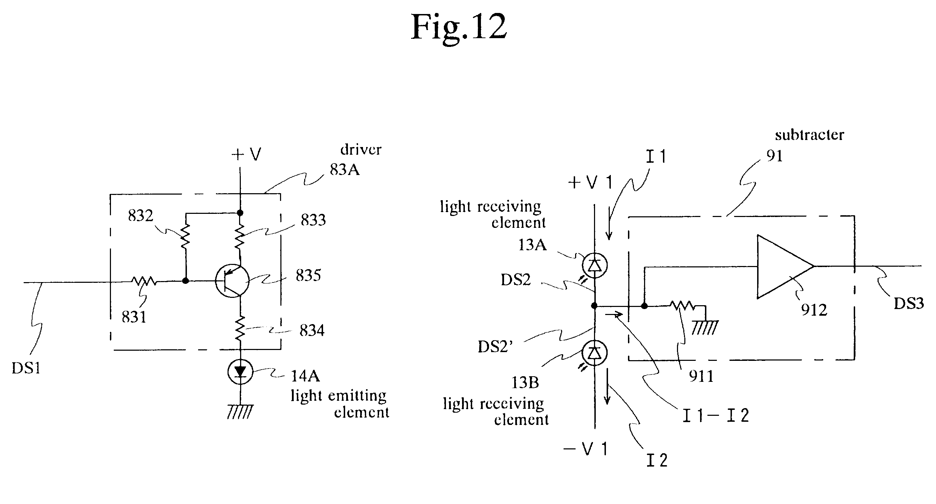

Fig. 12 illustrates the electric circuit in accordance with the embodiment. In the diagram, the same constituent parts as the above are designated by the identical reference numerals and are not again described.

In this embodiment, an infrared LED is used as the light emitting element 14A, and infrared photodiodes are used as the light receiving elements 13A and 13B.

More specifically, the driver 83A in the transmission unit 80 comprises resistors 831 to 834 and a transistor 835, with the resistor 831 having one end receiving a digital signal DS1 and the other end connected both to the base of the transistor 835 and to one end of the resistor 832, with the emitter of the transistor 835 being connected to one end of the resistor 833.

A predetermined voltage +V is applied to the other ends of the resistors 832 and 833. The collector of the transistor 835 is connected via the resistor 834 to the anode of the light emitting element (LED) 14A, whose cathode is grounded.

Thus, the transistor 835 is switched in response to the digital signal DS1, and a voltage to be applied to the light emitting element 14A to activate the latter.

In the reception unit 90, the subtracter 91 comprises a resistor 911 and an amplifier 912, with one end of the resistor 911 being connected to the anode of the light receiving element (photodiode) 13A, to the cathode of the light receiving element (photodiode) 13B and to the input terminal of the amplifier 912, with the other end of the resistor 911 being grounded. A predetermined positive voltage +V1 is applied to the cathode of the light receiving element 13A, whereas a predetermined negative voltage - V1 is applied to the anode of the light receiving element 13B.

Thus, a current (I1 - I2) of difference between an output current I1 of the light receiving element 13A and an output current I2 of the light receiving element 13B is converted by the resistor 911 into a voltage, which is fed as input to the amplifier 912.

The transmission unit 80 of this embodiment may further comprise a convex lens confronting the linearly polarizer 18C on its light output side so as to allow a radiation into the air in the form of parallel rays.

A second embodiment of the present invention is described hereinbelow.

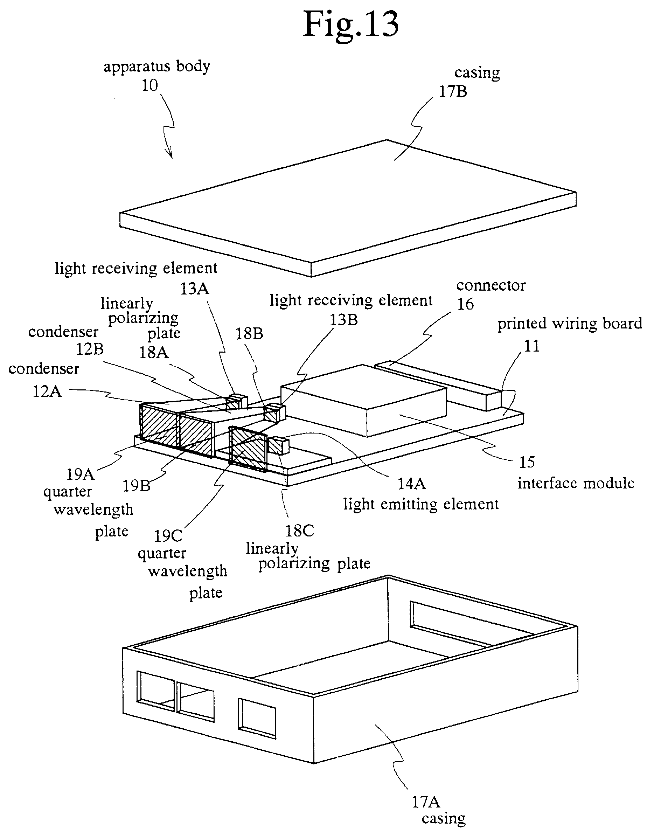

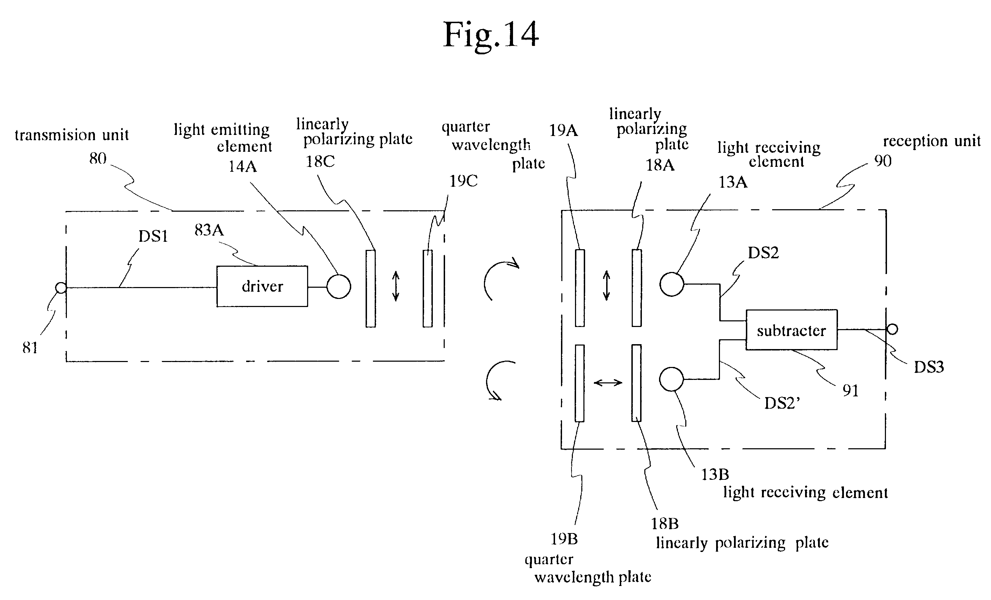

Fig. 13 is a perspective view of an optical digital communication apparatus in accordance with a second embodiment of the present invention, and Fig. 14 illustrates a principal configuration of an electric and optical circuit in the optical digital communication apparatus of the second embodiment. In the diagrams, the same constituent parts as those of the above first embodiment are designated by the identical reference numerals and are not again described.

The first embodiment differs from the second embodiment in that the transmission unit 80 comprises a quarter wavelength plate 19C and that the reception unit 90 comprises quarter wavelength plates 19A and 19B.

More specifically, the quarter wavelength plate 19C is disposed on the light output side of the linearly polarizer 18C of the transmission unit 80. The arrangement of the linearly polarizer 18c is such that its plane of polarization is angled at 45 degrees relative to the optical axes x and y of the quarter wavelength plate 19C. Thus, a light from the light emitting element 14A passes through the linearly polarizer 18C for the conversion into a linearly polarized light and further through the quarter wavelength plate 19C, resulting in a circularly polarized light which is radiated into the space.

Furthermore, the quarter wavelength plate 19A is disposed on the light input side of the linearly polarizer 18A of the reception unit 90 and the quarter wavelength plate 19B is disposed on the light input side of the linearly polarizer 18B of the reception unit 90.

The arrangement of the linearly polarizers 18A and 18B is such that their planes of polarization are angled at 45 degrees relative to the optical axes x and y of the quarter wavelength plates 19A and 19B, respectively. Thus, the quarter wavelength plate 19A regenerate a circularly polarized light or an elliptically polarized light from the quarter wavelength plate 19C as a linearly polarized light, which traverses the linearly polarizer 18A into the light receiving element 13A.

The quarter wavelength plate 19B allows a circularly polarized light or an elliptically polarized light different in the direction of rotation of the plane of polarization from the circularly polarized light or the elliptically polarized light from the quarter wavelength plate 19C among disturbance lights scattered into the space to pass therethrough for the conversion into a linearly polarized light, which traverses the linearly polarizer 18B into the light receiving element 13B.

According to the above configuration, a signal light propagates in the form of a circularly polarized light or an elliptically polarized light through the space, so that there can be prevented any variation in the receive level due to respective angles of rotation of the transmission unit 80 and the reception unit 90, while simultaneously ensuring an exclusive acquisition of the digital signal to be transmitted with the disturbance light noise eliminated. It is thus possible to accomplish a remarkable reduction in the influence of the disturbance light noise and an increase in the communication distance as compared with the conventional techniques.

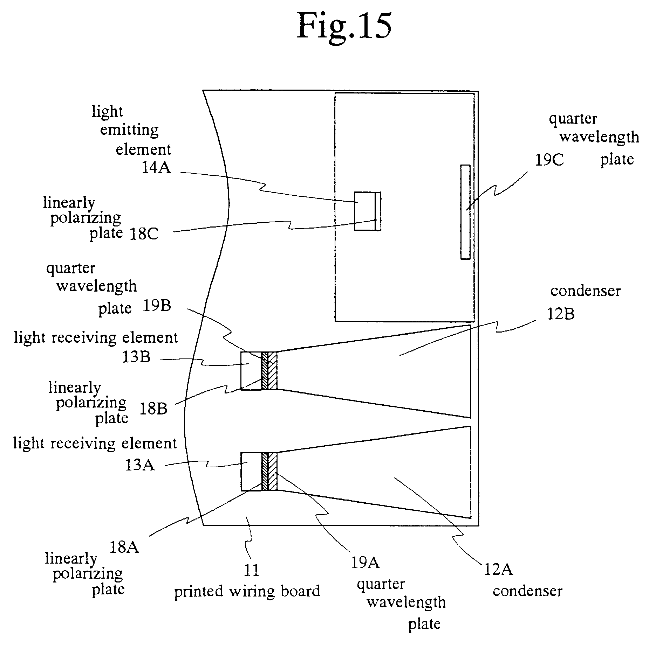

Although in the above configuration, i.e., the configuration illustrated in Fig. 13 the quarter wavelength plates 19A and 19B are arranged at or near the entrance ports 12a of the condensers 12A and 12B, the present invention is not intended to be limited to this. As shown in Fig. 15 by way of example, the quarter wavelength plates 19A and 19B may be positioned at or near the exit ports 12b of the condensers 12A and 12B.

Description is now made of a third embodiment of the present invention.

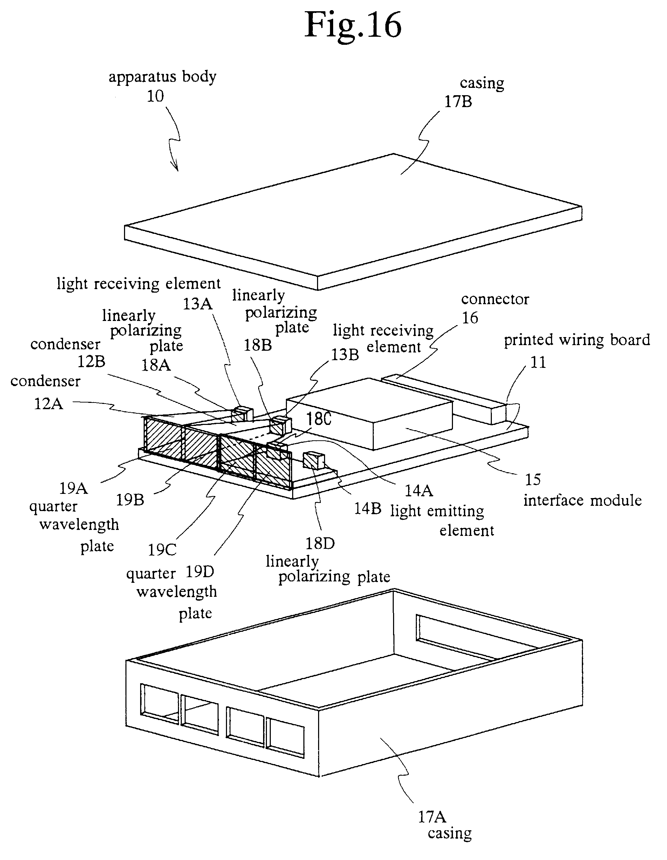

Fig. 16 is a perspective view of an optical digital communication apparatus in accordance with the third embodiment. In the diagram, the same constituent parts as those of the above second embodiment are designated by the identical reference numerals and are not again described.

The third embodiment differs from the second embodiment in that the former comprises a pair of light emitting elements in addition to the pair of light receiving elements, each pair being associated with two linearly polarizers and two quarter wavelength plates which allow passage therethrough of linearly polarized lights whose planes of polarization are normal to each other, so as to able to receive and transmit two different types of signal lights.

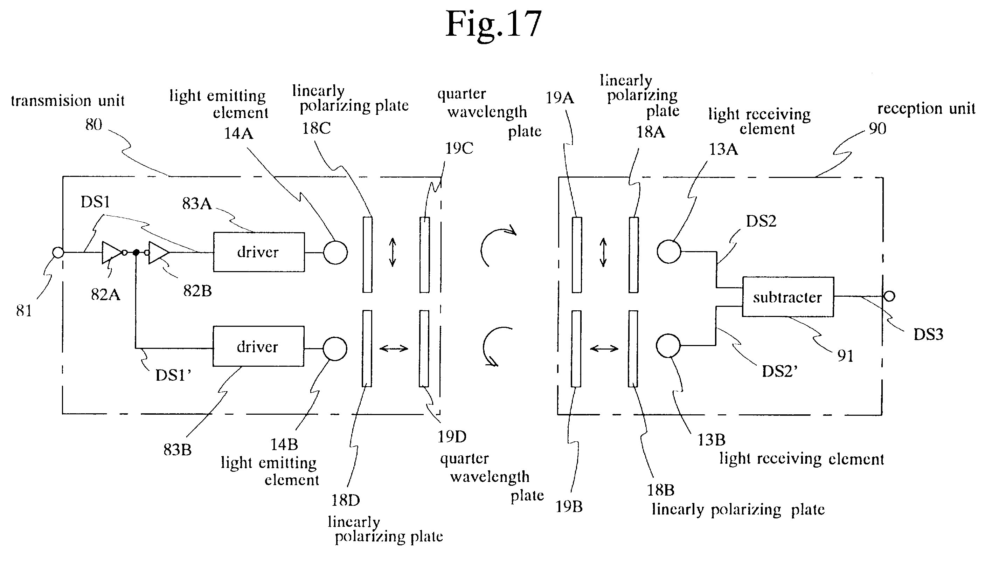

Fig. 17 illustrates a principal configuration of an electric and optical circuit in the optical digital communication apparatus of the third embodiment. Similar to the above embodiments, the optical digital communication apparatus body is generally designated at 10 and comprises the transmission unit 80, the reception unit 90 and the interface module 15 incorporating electric circuits of the transmission 80 and reception 90 units.

The transmission unit 80 includes the input terminal 81, NOT circuits 82A and 82B, drivers 83A and 83B, light emitting elements 14A and 14B, linearly polarizers 18C and 18D and quarter wavelength plates 19C and 19D.

After the input to the input terminal 81, a digital signal DS1 to be transmitted is fed to the driver 83A by the NOT circuits 82A and 82B connected in series and is fed to the driver 83B by only the NOT circuit 82A.

Thus, the driver 83B receives a digital signal DS1' which is obtained by inverting the digital signal fed to the driver 83A, i.e., the digital signal DS1 to be transmitted.

The two drivers 83A and 83B have the same configuration and in response to the input digital signal serve to drive the light emitting elements 14A and 14B to cause the latter to emit a light.

On their respective light output sides, the light emitting elements 14A and 14B are provided with the linearly polarizers 18C and 18D. Lights from the light emitting elements 14A and 14B pass through the linearly polarizers 18C and 18D for the conversion into linearly polarized lights, which enter the quarter wavelength plates 19C and 19D to be radiated into the space in the form of circularly polarized lights or elliptically polarized lights whose directions of rotation are different from each other.

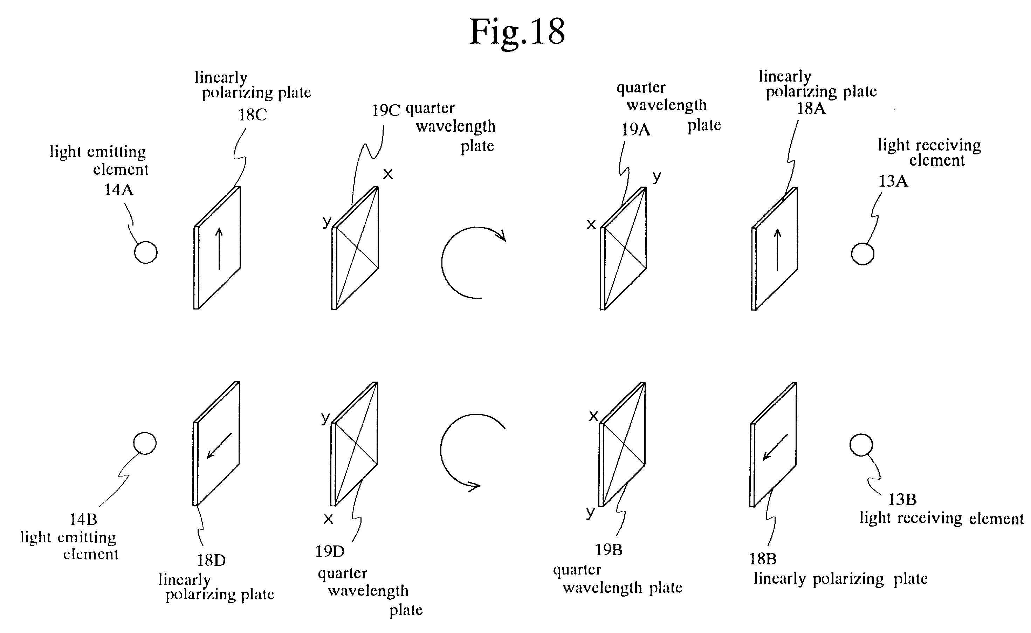

The linearly polarizers 18C and 18D are so set that the planes of polarization of the linearly polarized lights passing therethrough are normal to each other. Furthermore, as shown in Fig. 18, the linearly polarizers 18C and 18D in the transmission unit 80 are so arranged that the planes of polarization of the linearly polarized lights passing therethrough are angled at 45 degrees relative to the optical axes x and y of the quarter wavelength plates 19C and 19D.

The reception unit 90 on the other hand includes the quarter wavelength plates 19A and 19B, the linearly polarizers 18A and 18B, the light receiving elements 13A and 13B and the subtracter 91.

The light receiving elements 13A and 13B receive optical signals issued from the transmission unit 80 on another optical digital communication apparatus and convert them into electric signals DS2 and DS2' as their respective outputs. On the respective light input sides of the light receiving elements 13A and 13B, the linearly polarizers 18A and 18B are respectively disposed, so as to be able to detect the lights delivered through the linearly polarizers 18C and 18D provided in the transmission unit 80. Furthermore, the quarter wavelength plates 19A and 19B confront the linearly polarizers 18A and 18B on their respective light input sides.

As shown in Fig. 18, the linearly polarizers 18A and 18B in the reception unit 90 are so arranged that the planes of polarization of the linearly polarized lights passing therethrough are angled at 45 degrees relative to the optical axes of the quarter wavelength plates 19A and 19B so as to regenerate the linearly polarized lights of the transmission unit 80.

The subtracter 91 receives the output signals DS2 and DS2' from the two light receiving elements 13A and 13B, respectively. The subtracter 91 generates as its output, e.g., an electric signal DS3 having a voltage level obtained by subtracting from a voltage level of the electric signal DS2 output from the light receiving element 13A on one hand a voltage level of the electric signal DS2' output from the light receiving element 13B on the other hand.

Operation is now described of the optical digital communication apparatus having the above configuration.

In the transmission unit 80, the light emitting element 14A receives a digital signal DS1 to be transmitted, in response to which a light is emitted from the light emitting element 14A. The light from the light emitting element 14A is turned into a linearly polarized light through the linearly polarizer 18C, which traverses the quarter wavelength plates 19C to be converted into a circularly polarized light or an elliptically polarized light for the radiation into the air.

The light emitting element 14B receives a digital signal DS1' as a result of the inversion of the transmitted digital signal DS1 by the NOT circuit 82A and gives out a light in response to the digital signal DS1'.

The light from the light emitting element 14B is turned into a linearly polarized light through the linearly polarizer 18D and then radiated into the air by the quarter wavelength plates 19D in the form of a circularly polarized light or an elliptically polarized light having a plane of polarization whose direction of rotation is different from that of the circularly polarized light or the elliptically polarized light derived through the quarter wavelength plate 19C.

In the reception unit 90 on the other hand, the circularly polarized light or the elliptically polarized light, which has been radiated through the linearly polarizer 18C and the quarter wavelength plate 19C in the transmission unit 80 of another optical digital communication apparatus, is turned into a linearly polarized light through the quarter wavelength plate 19A and then traverses the linearly polarizer 18A into the light receiving element 13A.

The circularly polarized light or the elliptically polarized light, which has been radiated through the linearly polarizer 18D and the quarter wavelength plate 19D, is turned into a linearly polarized light through the quarter wavelength plate 19B and then traverses the linearly polarizer 18B into the light receiving element 13B.

The two light receiving elements 13A and 13B convert the incident lights into electric signals DS2 and DS2', which are fed to the subtracter 91. The subtracter 91 obtains a value of difference in level between the two input electric signals DS2 and DS2' to generate an electric signal DS3 having a level of that value.

Thus, a transmitted signal propagates in the form of a circularly polarized light or an elliptically polarized light through the space, so that any variation in the receive level due to respective angles of rotation of the transmission unit 80 and the reception unit 90 can be prevented.

Moreover, the subtracter 91 eliminates disturbance light noise components equally input to the two light receiving elements 13A and 13B. The electric signal DS2 derived from the light receiving element 13A is in phase with the digital signal DS1 to be transmitted whereas the electric signal DS2' derived from the light receiving element 13B is out of phase by 180 degrees with the digital signal DS1 to be transmitted. In consequence, obtaining a difference in voltage level between the two electric signals DS2 and DS2' results in an acquisition of the electric signal DS3 in phase with the digital signal DS1 to be transmitted and having an electric signal level which is equal to the sum of the electric signal levels output from the two light receiving elements 13A and 13B.

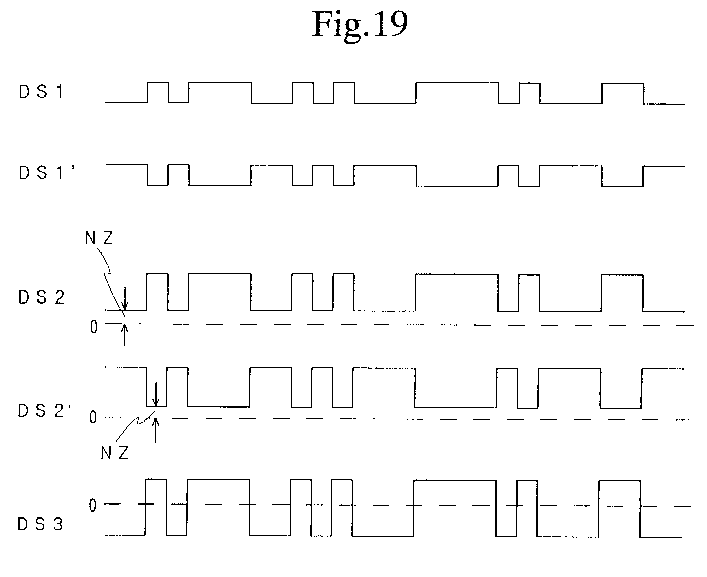

As is apparent from a waveform diagram of Fig. 19, disturbance light noise components NZ equally input to the two light receiving elements 13A and 13B are eliminated by the subtracter 91. The digital signal DS2 derived from the light receiving element 13A on one hand is in phase with the digital signal DS1 to be transmitted whereas the digital signal DS2' derived from the light receiving element 13B on the other hand is out of phase by 180 degrees with the digital signal DS1 to be transmitted. In consequence, obtaining a difference in voltage level between the two electric signals results in an acquisition of the electric signal DS3 in phase with the digital signal DS1 to be transmitted and having an electric signal level which is equal to the sum of the electric signal levels output from the two light receiving elements 13A and 13B.

Accordingly, a signal light propagates in the form of a circularly polarized light or an elliptically polarized light through the space, so that there can be prevented any variation in the receive level due to respective angles of rotation of the transmission unit 80 and the reception unit 90, while simultaneously ensuring an exclusive acquisition of the digital signal to be transmitted with the disturbance light noise eliminated. It is thus possible to accomplish a remarkable reduction in the influence of the disturbance light noise and an increase in the communication distance as compared with the conventional techniques.

Description is now made of one embodiment of an electric circuit in accordance with the present embodiment.

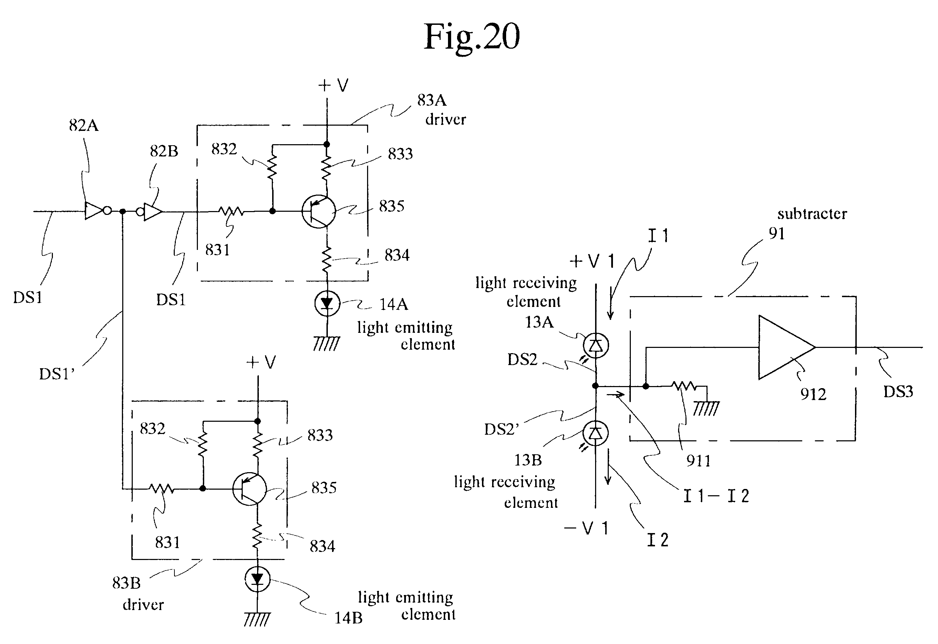

Fig. 20 illustrates the electric circuit in the one embodiment. In the diagram, the same constituent parts as the above are designated by the identical reference numerals.

This embodiment employs infrared LEDs as the light emitting elements 14A and 14B and employs infrared photodiodes as the light receiving elements 13A and 13B.

More specifically, the drivers 83A and 83B in the transmission unit 80 each comprise the resistors 831 to 834 and the transistor 835, with the resistor 831 having one end receiving a digital signal DS1 or DS1' and the other end connected to the base of the transistor 835 and to one end of the resistor 832, and with the emitter of the transistor 835 being connected to one end of the resistor 833.

A predetermined voltage +V is applied to the other ends of the resistors 832 and 833. The collector of the transistor 835 is connected via the resistor 834 to the anode of the light emitting element (LED) 14A or 14B of which cathode is grounded.

Thus, the transistor 835 is switched in response to the digital signal DS1 or DS1', allowing a voltage to be applied to the light emitting element 14A or 14B to activate the light emitting element 14A or 14B.

In the reception unit 90, the subtracter 91 comprises the resistor 911 and the amplifier 912, with one end of the resistor 911 being connected to the anode of the light receiving element (photodiode) 13A, to the cathode of the light receiving element (photodiode) 13B and to the input terminal of the amplifier 912, with the other end of the resistor 911 grounded. A predetermined positive voltage +V1 is applied to the cathode of the light receiving element 13A, whereas a predetermined negative voltage -V1 is applied to the anode of the light receiving element 13B.

Thus, a current (I1 - I2) of difference between an output current I1 of the light receiving element 13A and an output current I2 of the light receiving element 13B is converted by the resistor 911 into a voltage, which is fed as input to the amplifier 912.

The transmission unit 80 of this embodiment may further comprise convex lenses confronting the quarter wavelength plates 19C and 19D on their respective light output sides so as to allow radiation into the air in the form of parallel rays.

A fourth embodiment of the present invention is described hereinbelow.

In the fourth embodiment, a shielding plate is provided in the optical system of the transmission unit 80 of the third embodiment described above.

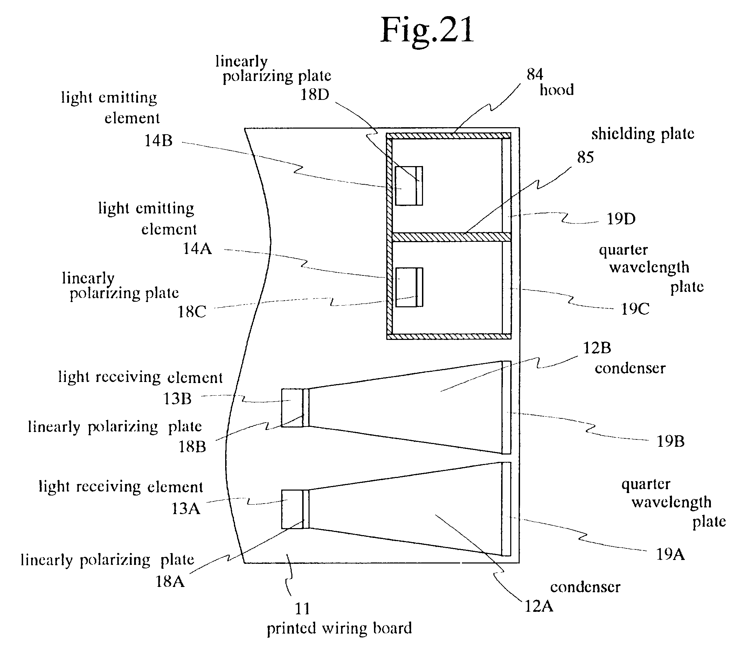

More specifically, as shown in Fig. 21, the optical system of the transmission unit 80 further includes a hood 84 for covering the light emitting elements 14A and 14B, the linearly polarizers 18C and 18D and the quarter wavelength plates 19C and 19D, and includes the shielding plate 85 for preventing a mixture of lights between one optical system associated with the light emitting element 14A and the other optical system associated with the light emitting element 14B.

Thus, free from any disturbance light in the transmission unit 80, the infrared rays emitted from the light emitting elements 14A and 14B pass through the linearly polarizers 18C and 18D and through the quarter wavelength plates 19C and 19D and are radiated into the air toward the reception unit 90 on another optical digital communication apparatus.

It is therefore possible to reduce the influence of the disturbance light components and hence to increase the communication distance as compared with the conventional optical digital communication apparatus.

A fifth embodiment of the present invention is now described.

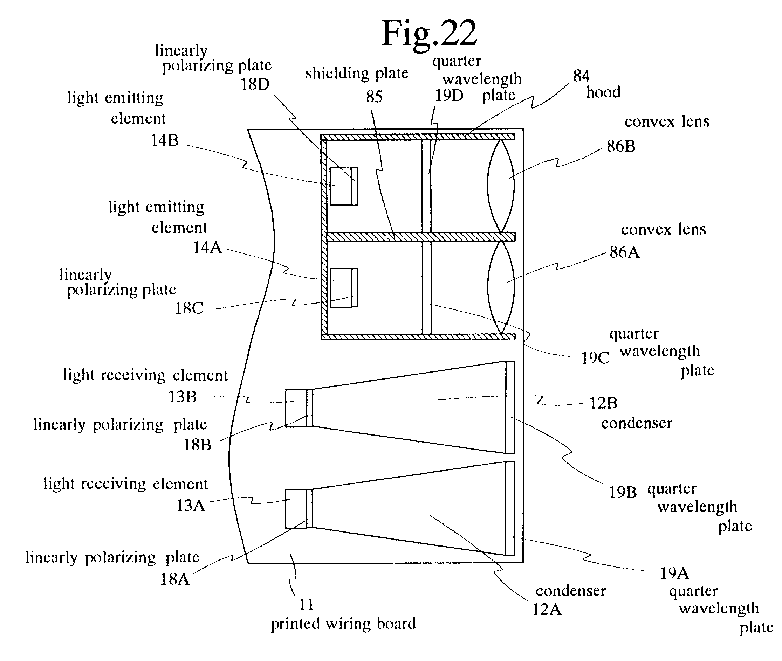

In the fifth embodiment, convex lenses are provided in the optical system of the transmission unit 80 of the fourth embodiment described above. More specifically, as shown in Fig. 22, the optical system of the transmission unit 80 further includes the convex lenses designated at 86A and 86B and confronting the quarter wavelength plates 19C and 19D on their respective light output sides.

Thus, free from any disturbance light in the transmission unit 80, the infrared rays emitted from the light emitting elements 14A and 14B traverse the linearly polarizers 18C and 18D and the quarter wavelength plates 19C and 19D and then are turned into parallel rays through the convex lenses 86A and 86B to be finally radiated into the air toward the reception unit 90 on another optical digital communication apparatus.

It is therefore possible to concentratedly send out optical signals toward the direction where another optical digital communication apparatus lies to receive the signals.

A sixth embodiment of the present invention is now described.

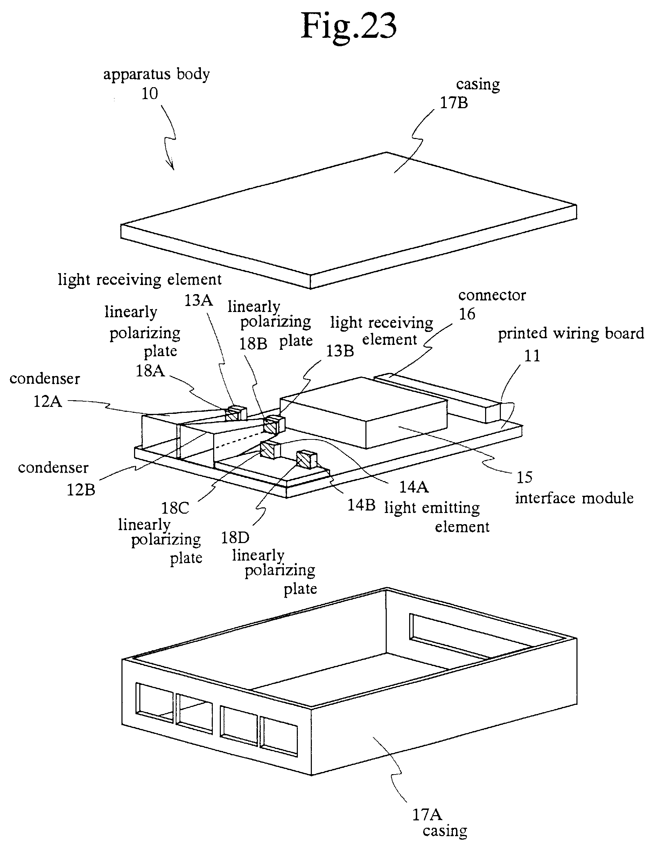

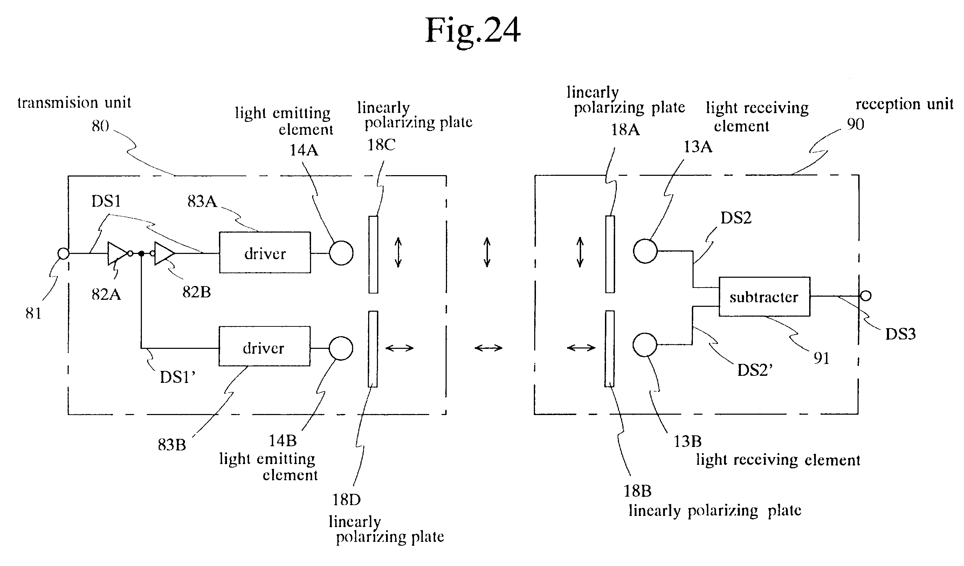

Fig. 23 is a perspective view of an optical digital communication apparatus in accordance with the sixth embodiment. Fig. 24 illustrates a principal configuration of an electric and optical system of the optical digital communication apparatus of the sixth embodiment. In the diagram, the same constituent parts as those of the third embodiment are designated by the identical reference numerals and are not again described.

The sixth embodiment differs from the third embodiment in that the quarter wavelength plates 19A, 19B, 19C and 19D are excluded from the transmission unit 80 and the reception unit 90. As is apparent from Fig. 23, the entrance ports of the condensers 12A and 12B are not provided with the quarter wavelength plates 19A and 19B. Similarly, the light emitting elements 14A and 14B are not provided on their respective light output sides with the quarter wavelength plates 19C and 19D.

Referring to Fig. 24, operation is now described of the optical digital communication apparatus having the above configuration.

In the transmission unit 80, the light emitting element 14A receives a digital signal DS1 to be transmitted and emits a light in response to the signal DS1. The light emitted from the light emitting element 14A is converted by the linearly polarizer 18C into a linearly polarized light and then radiated into the air.

The light emitting element 14B receives a digital signal DS1' obtained by inverting the transmitted digital signal DS1 through the NOT circuit 82A and emits a light in response to the signal DS1'.

The light emitted from the light emitting element 14B is converted by the linearly polarizer 18D into a linearly polarized light having a plane of polarization different from the plane of polarization of the linearly polarized light obtained through the linearly polarizer 18C, and then is radiated into the air.

In the reception unit 90 on the other hand, the light receiving element 13A receives through the linearly polarizer 18A the linearly polarized light radiated through the linearly polarizer 18C of the transmission unit 80 on another optical digital communication apparatus to communicate therewith.

At the same time, the light receiving element 13B receives through the linearly polarizer 18B the linearly polarized light radiated through the linearly polarizer 18D of the transmission unit 80 on another optical digital communication apparatus 80 to communicate therewith.

These two light receiving elements 13A and 13B convert the incident lights into electric signals DS2 and DS2', which are fed as input to the subtracter 91. The subtracter 91 obtains a value of difference in level between the two input electric signals DS2 and DS2' to generate as its output an electric signal DS3 having a level of that value.

As a result of this, the subtracter 91 eliminates disturbance light noise components equally input to the two light receiving elements 13A and 13B.

The electric signal DS2 issued from the light receiving element 13A on one hand is in phase with the digital signal DS1 to be transmitted whereas the electric signal DS2' issued from the light receiving element 13B on the other hand is out of phase by 180 degrees with the digital signal DS1 to be transmitted. In consequence, obtaining a difference in level between these electric signals DS2 and DS2' results in an acquisition of an electric signal DS3 in phase with the digital signal DS1 to be transmitted and having a level equal to the sum of the electric signal levels output from the two light receiving elements 13A and 13B.

Therefore, according to the optical digital communication apparatus of this embodiment, the signal propagates through the space in the form of a linearly polarized light, so that the disturbance light noise components equally input to the two light receiving elements 13A and 13B are eliminated as a result of obtaining the difference between the output signals from these two light receiving elements 13A and 13B although some variation in the receive level due to respective angles of rotation of the transmission unit 80 and the reception unit 90.

In consequence, the thus obtained digital signal results in an electric signal having a level equal to the sum of the electric signal levels output from the two light receiving elements 13A and 13B, thereby ensuring an exclusive acquisition of a digital signal to be transmitted with the disturbance light noise eliminated. It is thus possible to achieve a remarkable reduction in the influence of the disturbance light noise and an increase in the communication distance as compared with the conventional techniques.

The electric circuits of the above embodiments are merely by way of example and that the present invention is not intended to be limited to these. For instance, the objects of the present invention could also be accomplished by combinations of the above embodiments.

Furthermore, in the present invention, the linearly polarizers 18A, 18C and the linearly polarizers 18B, 18D are so set as to allow the planes of polarization of the linearly polarized lights passing therethrough to be normal to each other, but this is not essential.

Description is now made of a seventh embodiment of the present invention.

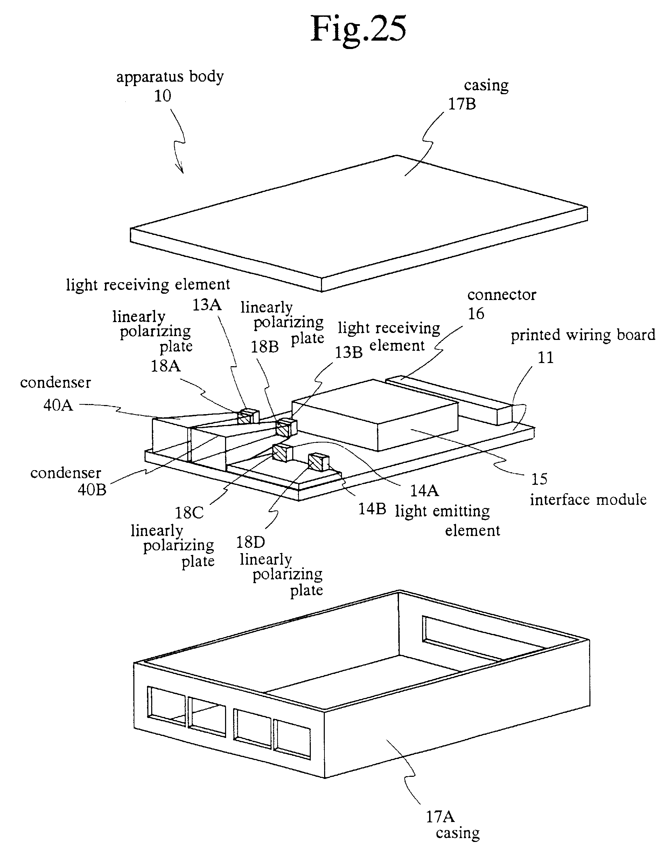

Fig. 25 is a perspective view of an optical digital communication apparatus in accordance with the seventh embodiment. In the diagram, the same constituent parts as those of the sixth embodiment are designated by the identical reference numerals and are not again described.

The seventh embodiment differs from the sixth embodiment in that the hollow condensers 12A and 12B are replaced by solid condensers 40 (40A and 40B) made of a translucent resin.

More specifically, the condenser 40 is in the shape of a truncated quadratic pyramid and made of a translucent resin having a predetermined refractive index n, e.g., n=1.5. The solid truncated quadratic pyramid has a bottom serving as a light entrance face 40a and a top serving as a light exit face 40b, and is interposed between the light emitting element 13 and a light receiving window associated therewith.

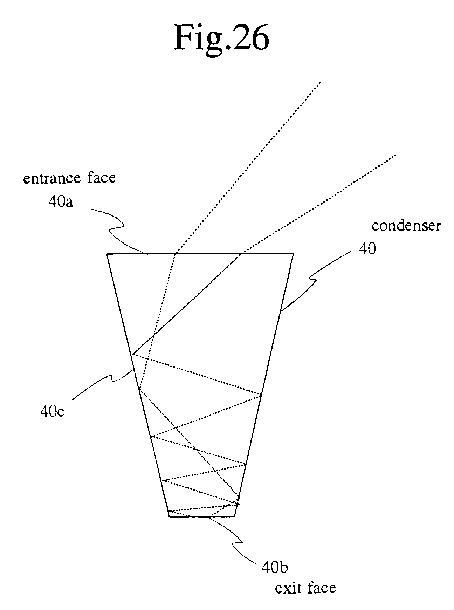

According to the thus configured condenser of the optical digital communication apparatus, as shown in Fig. 26, a signal light from the external space falling on the light entrance face 40a of the condenser 40 is refracted at the plane of the light entrance face 40a and then enter the interior of the condenser 40. Side faces 40c of the condenser 40 have a different refractive index from that of the external space and hence serve as light reflective faces. As a result of this, the signal light which has entered the solid interior of the condenser 40 is reflected several times on the reflective faces to reach the light exit face 40b.

Thus, by virtue of the refraction caused when the signal light enters the interior of the condenser 40 from the external space, the allowable range of angle of incidence, i.e., the directivity is enlarged as compared with the condenser of the first embodiment described earlier, contributing to an enlargement in the allowable range of movement of the transmission side light source.

Description is now made of an eighth embodiment of the present invention.

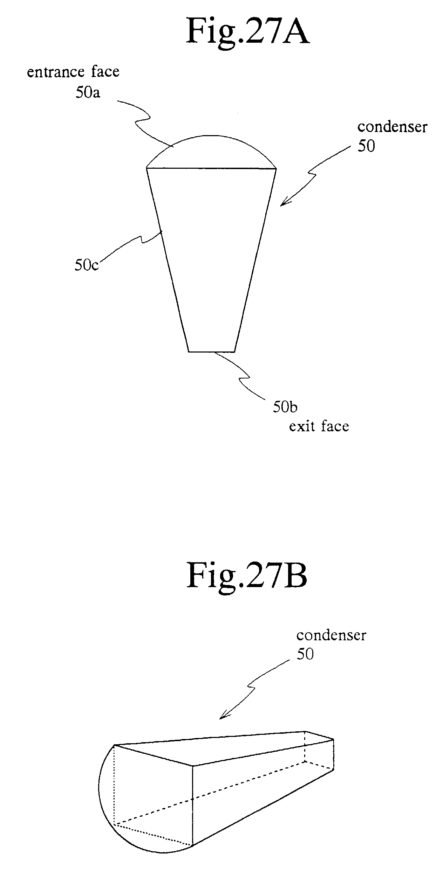

Fig. 27 is a perspective view of a condenser provided in an optical digital communication apparatus in accordance with the eighth embodiment. The general configuration of the optical digital communication apparatus is substantially the same as that of the seventh embodiment.

The eighth embodiment differs from the seventh embodiment in that the condenser 40 is replaced by a condenser 50 having a light entrance face in the shape of a convex spherical surface.

The condenser 50 is substantially in the shape of a truncated quadratic pyramid and is made of a translucent resin having a predetermined refractive index n, e.g., n=1.5. The condenser 50 has a bottom formed into a convexed spherical surface serving as a light entrance face 50a and a planar top serving as a light exit face 50b, and is interposed between the light receiving element 13(13A, 13B) and the light receiving window associated therewith.

According to the above configuration, a signal light from the external space falling on the light entrance face 50a of the condenser 50 is refracted at the spherical surface of the light entrance face 50a and then enter the interior of the condenser 50. Side faces 50c of the condenser 50 have a different refractive index from that of the external space and hence serve as light reflective faces. As a result of this, the signal light which has entered the solid interior of the condenser 50 is reflected several times on the reflective faces to reach the light exit face 50b.

Thus, by virtue of the refraction caused when the signal light enters the interior of the condenser 50 from the external space, the allowable range of angle of incidence, i.e., the directivity is enlarged as compared with the condenser of the first embodiment described earlier. Furthermore, since the entrance face 50a of the condenser 50 is shaped into an outwardly protruding spherical surface, a further enlargement is achieved of the directivity and of the allowable range of movement of the transmission side light source.

A ninth embodiment of the present invention will then be described.

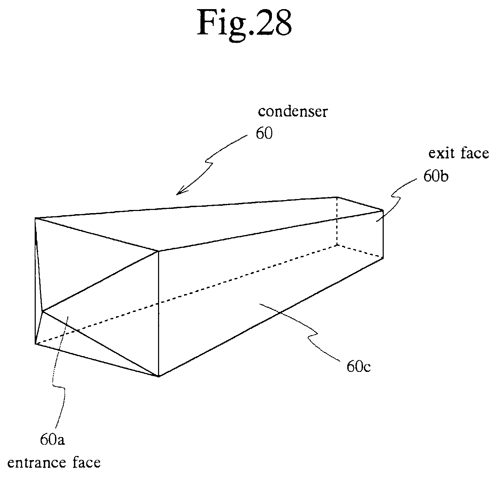

Fig. 28 is a perspective view of a condenser provided in an optical digital communication apparatus in accordance with the ninth embodiment. The general configuration of the optical digital communication apparatus is substantially the same as that of the seventh embodiment described above.

The ninth embodiment differs from the seventh embodiment in that the condenser 40 is replaced by a condenser 60 having an entrance face in the shape of an outwardly protruding quadratic pyramid.

The condenser 60 is substantially in the shape of a truncated quadratic pyramid and is made of a translucent resin having a predetermined refractive index n, e.g., n=1.5. The condenser 60 has a bottom in the shape of an outwardly protruding quadratic pyramid serving as an entrance face 60a and a planar top serving as an exit face 60b, and is interposed between the light receiving element 13 and the light receiving window associated therewith.

According to the above configuration, a signal light from the external space falling on the light entrance face 60a of the condenser 60 is refracted at the four planes of the light entrance face 60a and then enter the interior of the condenser 60. Side faces 60c of the condenser 60 have a different refractive index from that of the external space and hence serve as light reflective faces. As a result of this, the signal light which has entered the solid interior of the condenser 60 is reflected several times on the reflective faces to reach the light exit face 60b.

Thus, by virtue of the refraction caused when the signal light enters the interior of the condenser 60 from the external space, the allowable range of angle of incidence, i.e., the directivity is enlarged as compared with the condenser of the first embodiment described earlier.

Furthermore, since the entrance face 60a of the condenser 60 is shaped into an outwardly protruding quadratic pyramid, a further enlargement is achieved of the directivity and of the allowable range of movement of the transmission side light source.

A tenth embodiment of the present invention will then be described.

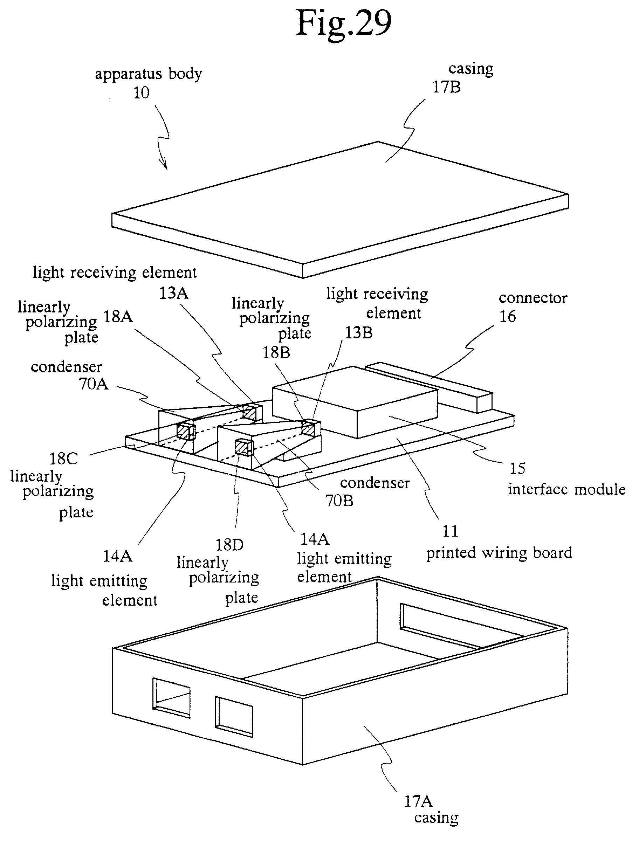

Fig. 29 is a perspective view of an optical digital communication apparatus in accordance with the tenth embodiment. In the diagram, the same constituent parts as those of the seventh embodiment described above are designated by the identical reference numerals and are not again described.

The tenth embodiment differs from the seventh embodiment in that the condensers 12A and 12B are replaced by solid condensers 70 made of a translucent resin material and each incorporating a light emitting element therewithin.

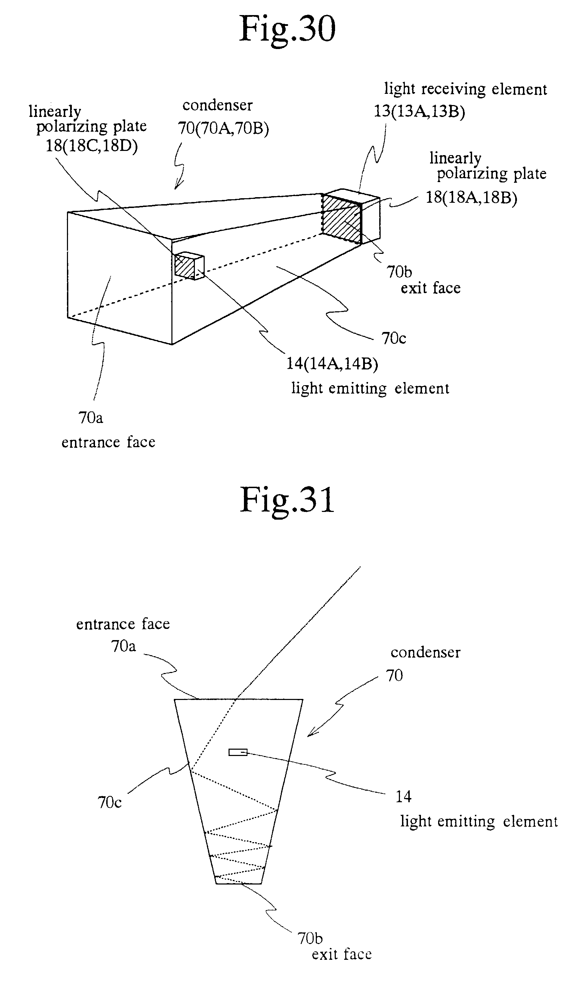

More specifically, the condenser 70 as shown in Fig. 30 is in the shape of a truncated quadratic pyramid and is made of a translucent resin having a predetermined refractive index n, e.g., n=1. 5. The solid truncated quadratic pyramid has a bottom as an entrance face 70a and a top as an exit face 70b and is interposed between the light receiving element 13 (13A, 13B) and the light receiving window associated therewith.

The interior of the condenser 70 is provided with a light emitting element 14 (14A, 14B) lying on the central axis of the condenser 70 and having a light emitting face directed toward the entrance face 70a.

The light receiving element 13 (13A, 13B) has the linearly polarizer 18 (18A, 18B) on its light input side and the light emitting element 14 (14A, 14B) has the linearly polarizer 18 (18C, 18D) on its light output side.

According to the thus configured optical digital communication apparatus, as shown in Fig. 31, a signal light from the external space falling on the entrance face 70a of the condenser 70 is refracted at the plane of the entrance face 70a and enters the interior of the condenser 70. Within the interior of the condenser 70, the signal light passes through the outside of the light emitting element 14 and is reflected several times on the light reflective planes of the side faces 70c to reach the exit face 70b.

A light emitted from the light emitting element 14 (14A, 14B) is radiated, directly or after reflection on the side faces 70c of the condenser 70, through the entrance face 70a into the external space.

Thus, there is no need for an additional space to arrange therein the light emitting element 14 (14A, 14B), contributing to a reduction in size of the apparatus.

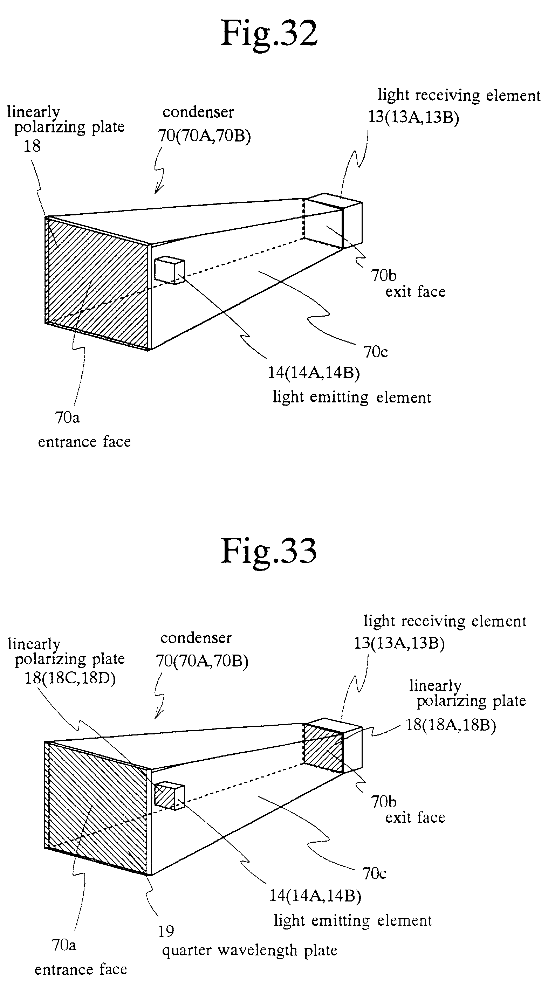

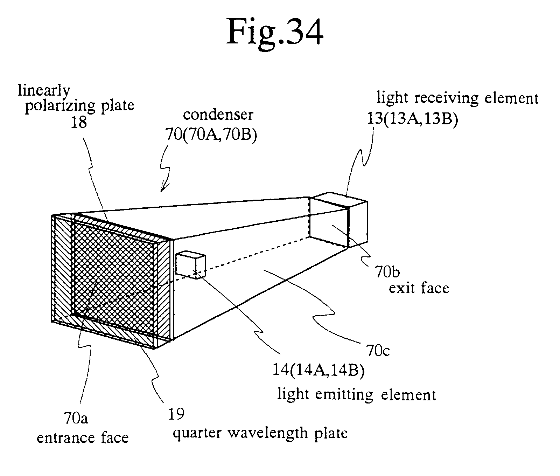

Although in the tenth embodiment the light receiving element 13 and the light emitting element 14 have been provided with their respective different linearly polarizers, a single linearly polarizer 18 may be disposed at the entrance port of the condenser 70 as shown in e.g., Fig. 32, to thereby allow both the light receiving element 13 and the light emitting element 14 to use the same linearly polarizer 18. In the case of radiating a signal light in the form of a circularly polarized light or an elliptically polarized light, a quarter wavelength plate 19 may be disposed at the entrance port 70a of the condenser 70 as shown in Fig. 33 or 34.

In order to ensure substantially the same effects, the condensers of the above embodiments could be in the shape of a truncated cone or of any other truncated pyramid. It is however preferred to employ the condenser having entrance and exit ports in the shape of a square or a rectangle since a light which has entered the interior of the condenser reflects between the opposed inner faces, preventing any disturbance of the polarized state with a reduction of loss.

Although the optical digital communication apparatuses in accordance with the above embodiments have been provided with the condensers, substantially the same effects excepting the condensing capability could be achieved without the condensers.

## Claims

1. An optical digital communication method comprising the step of:
on a transmission side, activating a light emitting element by a digital electric signal to be transmitted, and converting an output light from said light emitting element into a linearly polarized light for the radiation into the air; and
on a reception side, receiving said linearly polarized light radiated from said transmission side and another linearly polarized light having a plane of polarization different from the plane of polarization of said linearly polarized light by correspondingly provided two different light receiving elements, and obtaining a difference in level between two different electric signals derived from said two different light receiving elements to acquire said digital electric signal to be transmitted.

2. In an optical digital communication method according to claim 1, wherein
said transmission side activates two different light emitting elements respectively by a digital electric signal to be transmitted and by an inverted digital electric signal obtained as a result of inversion of said digital electric signal, converts respective output lights from said two different light emitting elements into two different linearly polarized lights receivable by said reception side, and radiates them into the air.

3. An optical digital communication method according to claim 1, wherein
said transmission side converts a linearly polarized light through a wavelength plate into a circularly polarized light or elliptically polarized light having a predetermined direction of rotation prior to the radiation into the air, while said reception side converts said circularly polarized light or elliptically polarized light radiated from said transmission side and another circularly polarized light or elliptically polarized light having a direction of rotation different from said predetermined direction of rotation, through wavelength plates into two different linearly polarized lights receivable prior to the reception.

4. An optical digital communication method according to claim 1 or 2, wherein
on said reception side, said two different light receiving elements receive different linearly polarized lights having their respective planes of polarization normal to each other.

5. An optical digital communication method according to claim 1 or 2, wherein
infrared rays are used as said light to perform communication.

6. An optical digital communication method according to claim 1 or 2, wherein
said reception side includes a condenser in the shape of a truncated cone or a truncated pyramid having a bottom as a light entrance port and a top as a light exit port with an area smaller than the area of said entrance port, at least the inside of side faces of said condenser serving as a light reflective face, said condenser guiding a light radiated from said transmission side into said light receiving element of said reception side.

7. An optical digital communication method according to claim 1 or 2, wherein
said reception side includes a condenser in the shape of a truncated pyramid having a square or rectangular bottom as a light entrance port and a square or rectangular top as a light exit port with an area smaller than the area of said entrance port, at least the inside of side faces of said condenser serving as a light reflective face, said condenser guiding a light radiated from said transmission side into said light receiving elements of said reception side.

8. An optical digital communication method according to claim 1 or 2, wherein
said reception side includes a tubular condenser in the shape of a hollow truncated cone or a hollow truncated pyramid having a bottom as a light entrance port and a top as a light exit port with an area smaller than the area of said entrance port, the inner side faces of said condenser serving as a light reflective face, said condenser guiding a light radiated from said transmission side into said light receiving element of said reception side.

9. An optical digital communication method according to claim 1 or 2, wherein
said reception side includes a condenser made of a translucent material having a predetermined refractive index, said condenser shaped into a truncated cone or a truncated pyramid having a bottom as a light entrance port and a top as a light exit port smaller in area than said entrance port, the inside of side faces of said condenser serving as a light reflective face, said condenser guiding a light radiated from said transmission side into said light receiving element of said reception side.

10. An optical digital communication method according to claim 1 or 2, wherein
said reception side includes a condenser made of a translucent material having a predetermined refractive index, said condenser shaped into a truncated cone or a truncated pyramid having a bottom as a light entrance port and a top as a light exit port smaller in area than said entrance port, the inside of side faces of said condenser serving as a light reflective face, the face of said entrance port comprised of at least one outwardly protruding face whose profile varies in a predetermined linear or parabolic form, said condenser guiding a light radiated from said transmission side into said light receiving element of said reception side.

11. An optical digital communication apparatus having a transmission unit for issuing an optical signal corresponding to a digital electric signal to be transmitted and a reception unit for receiving said optical signal for the conversion into a digital electric signal, wherein
said transmission unit comprises:
a light emitting element for emitting a light in response to said digital electric signal; and
a first linearly polarizer provided on said light emitting element at its light output side; and wherein
said reception unit comprises:
first and second light receiving elements for receiving lights to convert them into electric signals;
a second linearly polarizer provided on said first light receiving element at its light input side, for detecting a light emitted from said first light emitting element;
a third linearly polarizer provided on said second light receiving element at its light input side, said third linearly polarizer allowing a passage of a linearly polarized light having a plane of polarization normal to the plane of polarization of a linearly polarizing light passing through said second linearly polarizer; and
a subtracter for receiving electric signals derived from said first and second light receiving elements to generate a difference in level between said electric signals.

12. An optical digital communication apparatus having a transmission unit for issuing an optical signal corresponding to a digital electric signal to be transmitted and a reception unit for receiving said optical signal for the conversion into a digital electric signal, wherein
said transmission unit comprises:
a light emitting element for emitting a light in response to said digital electric signal;
a first linearly polarizer provided on said light emitting element at its light output side; and
a first wavelength plate for receiving a linearly polarized light output from said first linearly polarizer to generate as its output a circularly polarized light or an elliptically polarized light; and wherein
said reception unit comprises:
a second wavelength plate for receiving a circularly polarized light or an elliptically polarized light output from said first wavelength plate to generate a linearly polarized light as its output;
a second linearly polarizer arranged to allow a passage of only a linearly polarized light output from said second wavelength plate;
a third wavelength plate for receiving a circularly polarized light or an elliptically polarized light having a plane of polarization whose direction of rotation differs from that of the plane of polarization of a circularly polarized light or an elliptically polarized light output from said first wavelength plate, to generate a linearly polarized light as its output;
a third linearly polarizer arranged to allow a passage of only a linearly polarized light output from said third wavelength plate;
a first light receiving element for receiving a linearly polarized light output from said second linearly polarizer to convert it into an electric signal;
a second light receiving element for receiving a linearly polarized light output from said third linearly polarizer to convert it into an electric signal; and
a subtracter for receiving electric signals derived from said first and second light receiving elements to generate as its output a difference in level between said electric signals.

13. An optical digital communication apparatus having a transmission unit for delivering into the space an optical signal corresponding to a digital electric signal to be transmitted and a reception unit for receiving an optical signal from the space to convert it into a digital electric signal, wherein
said transmission unit comprises:
a first light emitting element for emitting a light in response to a digital electric signal to be transmitted;
a NOT circuit for inverting said digital electric signal;
a second light emitting element for emitting a light in response to a digital electric signal which has been inverted by said NOT circuit;
a first linearly polarizer for receiving a light emitted from said first light emitting element to generate a linearly polarized light as its output; and
a second linearly polarizer for receiving a light emitted from said second light emitting element to generate as its output a linearly polarized light having a plane of polarization different from the plane of polarization of a linearly polarized light output from said first linearly polarizer; and wherein
said reception unit comprises:
first and second light receiving elements for receiving lights to convert them into electric signals;
a third linearly polarizer provided on said first light receiving element at its light input side, said third linearly polarizer allowing a passage therethrough of a linearly polarized light output from said first light emitting element;
a fourth linearly polarizer provided on said second light emitting element at its light input side, said fourth linearly polarizer allowing a passage through of a linearly polarized light output from said second light emitting element; and
a subtracter for receiving electric signals derived from said first and second light receiving elements to generate as its output a difference in level between said electric signals.

14. An optical digital communication apparatus having a transmission unit for delivering into the space an optical signal corresponding to a digital electric signal to be transmitted and a reception unit for receiving an optical signal from the space to convert it into a digital electric signal, wherein
said transmission unit comprises:
a first light emitting element for emitting a light in response to a digital electric signal to be transmitted;
a NOT circuit for inverting said digital electric signal;
a second light emitting element for emitting a light in response to a digital electric signal which has been inverted by said NOT circuit;
a first linearly polarizer for receiving a light emitted from said first light emitting element to generate a linearly polarized light as its output;
a first wavelength plate for receiving a linearly polarized light output from said first linearly polarizer to generate a circularly polarized light or an elliptically polarized light as its output;
a second linearly polarizer for receiving a light emitted from said second light emitting element to generate a linearly polarized light as its output; and
a second wavelength plate for receiving a linearly polarized light output from said second linearly polarizer to generate as its output a circularly polarized light or an elliptically polarized light having a plane of polarization whose direction of rotation is different from that of the plane of polarization of the circularly polarized light or the elliptically polarized light output from said first wavelength plate; and wherein
said reception unit comprises:
a third wavelength plate for receiving a circularly polarized light or an elliptically polarized light output from said first wavelength plate to generate a linearly polarized light as its output;
a third linearly polarizer arranged so as to allow a passage therethrough of only a linearly polarized light output from said third wavelength plate;
a fourth wavelength plate for receiving a circularly polarized light or an elliptically polarized light output from said second wavelength plate to generate a linearly polarized light as its output;
a fourth linearly polarizer arranged so as to allow a passage therethrough of only a linearly polarized light output from said fourth wavelength plate;
a first light receiving element for receiving a linearly polarized light output from said third linearly polarizer to convert it into an electric signal;
a second light receiving element for receiving a linearly polarized light output from said fourth linearly polarizer to convert it into an electric signal; and
a subtracter for receiving electric signals derived from said first and second light receiving elements to generate as its output a difference in level between said electric signals.

15. An optical digital communication apparatus according to any one of claims 11 to 14, wherein
said light emitting elements emit infrared rays and said light receiving elements receive infrared rays to convert them into electric signals.

16. An optical digital communication apparatus according to any one of claims 11 to 14, further comprising:
a condenser in the shape of a truncated cone or a truncated pyramid having a bottom as a light entrance port and a top as a light exit port smaller in area than said entrance port, at least the inside of side faces of said condenser serving as a light reflective face, and wherein
said light receiving elements are positioned at said exit port of said condenser.

17. An optical digital communication apparatus according to any one of claims 11 to 14, further comprising:
a condenser in the shape of a truncated pyramid having a square or rectangular bottom as a light entrance port and a square or rectangular top as a light exit port smaller in area than said entrance port, at least the inside of side faces of said condenser serving as a light reflective face, and wherein
said light receiving elements are positioned at said exit port of said condenser.

18. An optical digital communication apparatus according to any one of claims 11 to 14, further comprising:
a tubular condenser in the shape of a hollow truncated cone or a hollow truncated pyramid having a bottom as a light entrance port and a top as a light exit port smaller in area than said entrance port, the inner side faces of said condenser serving as a light reflective face, and wherein
said light receiving elements are positioned at said exit port of said condenser.

19. An optical digital communication apparatus according to any one of claims 11 to 14, further comprising:
a condenser made of a translucent material having a predetermined refractive index, said condenser shaped into a truncated cone or a truncated pyramid having a bottom as a light entrance port and a top as a light exit port smaller in area than said entrance port, the inside of side faces of said condenser serving as a light reflective face, and wherein
said light receiving elements are positioned at said exit port of said condenser.

20. An optical digital communication apparatus according to any one of claims 11 to 14, further comprising:
a condenser made of a translucent material having a predetermined refractive index, said condenser shaped into a truncated cone or a truncated pyramid having a bottom as a light entrance port and a top as a light exit port smaller in area than said entrance port, the inside of side faces of said condenser serving as a light reflective face, the face of said entrance port comprised of at least one outwardly protruding face whose profile varies in a predetermined linear or parabolic form, and wherein
said light receiving elements are positioned at said exit port of said condenser.

21. An optical digital communication apparatus according to any one of claims 11 to 14, further comprising:
a condenser shaped into a truncated cone or a truncated pyramid having a bottom as a light entrance port and a top as a light exit port smaller in area than said entrance port, at least the inside of side faces of said condenser serving as a light reflective face, and wherein
said light receiving elements are positioned at said exit port of said condenser, with said light emitting elements positioned apart inside from both said exit port and said side faces by a predetermined distance so as to allow a light to be directed toward said entrance port.

22. An optical digital communication apparatus according to any one of claims 11 to 14, further comprising:
a condenser shaped into a truncated pyramid having a square or rectangular bottom as a light entrance port and a square or rectangular top as a light exit port smaller in area than said entrance port, at least the inside of side faces of said condenser serving as a light reflective face, and wherein
said light receiving elements are positioned at said exit port of said condenser, with said light emitting elements positioned apart inside from both said exit port and said side faces by a predetermined distance so as to allow a light to be directed toward said entrance port.

23. An optical digital communication apparatus according to any one of claims 11 to 14, further comprising:
a tubular condenser shaped into a hollow truncated cone or a hollow truncated pyramid having a bottom as a light entrance port and a top as a light exit port smaller in area than said entrance port, the inner side faces of said condenser serving as a light reflective face, and wherein
said light receiving elements are positioned at said exit port of said condenser, with said light emitting elements positioned apart inside from both said exit port and said side faces by a predetermined distance so as to allow a light to be directed toward said entrance port.

24. An optical digital communication apparatus according to any one of claims 11 to 14, further comprising:
a condenser made of a translucent material having a predetermined refractive index, said condenser shaped into a truncated cone or a truncated pyramid having a bottom as a light entrance port and a top as a light exit port smaller in area than said entrance port, the inner side faces of said condenser serving as a light reflective face, and wherein
said light receiving elements are positioned at said exit port of said condenser, with said light emitting elements positioned apart inside from both said exit port and said side faces by a predetermined distance so as to allow a light to be directed toward said entrance port.

25. An optical digital communication apparatus according to any one of claims 11 to 14, further comprising:
a condenser made of a translucent material having a predetermined refractive index, said condenser shaped into a truncated cone or a truncated pyramid having a bottom as a light entrance port and a top as a light exit port smaller in area than said entrance port, the inside of side faces of said condenser serving as a light reflective face, the face of said entrance port comprised of at least one outwardly protruding face whose profile varies in a predetermined linear or quadratic form, and wherein
said light receiving elements are positioned at said exit port of said condenser, with said light emitting elements positioned apart inside from both said exit port and said side faces by a predetermined distance so as to allow a light to be directed toward said entrance port.
